# EUROPÄISCHE PATENTSCHRIFT

(11) **EP 3 674 147 B1**
(45) Veröffentlichungstag und Bekanntmachung des Hinweises auf die Patenterteilung: **12.04.2023**
(21) Anmeldenummer: 19212342.0
(22) Anmeldetag: 28.11.2019
(51) Int. Cl.: B60W 50/00, B60W 50/08, B60W 50/10, B60W 50/14, B60K 35/00

(54) **VERFAHREN UND VORRICHTUNG ZUM ERZEUGEN VON STEUERSIGNALEN ZUM UNTERSTÜTZEN VON INSASSEN EINES FAHRZEUGS**
METHOD AND DEVICE FOR GENERATING CONTROL SIGNALS FOR SUPPORTING OCCUPANTS OF A VEHICLE
PROCÉDÉ ET DISPOSITIF DE GÉNÉRATION DE SIGNAUX DE COMMANDE POUR AIDER LES OCCUPANTS D'UN VÉHICULE

(30) Priorität: 28.12.2018 DE 102018133672
(43) Veröffentlichungstag der Anmeldung: 01.07.2020
(73) Patentinhaber: Volkswagen AG, 38440 Wolfsburg (DE)
(72) Erfinder: Schneider, Jens, 38114 Braunschweig (DE); Schlicht, Peter, 38442 Wolfsburg (DE)

(56) Entgegenhaltungen:
- DE-A1-102015 101 279
- DE-A1-102016 125 247
- US-A1- 2017 313 324
- US-B1- 9 193 314
- US-B1- 9 288 270

## Beschreibung

Die vorliegende Erfindung betrifft ein Verfahren und eine Vorrichtung zum Erzeugen von Steuersignalen zum Unterstützen von Insassen eines Fahrzeugs.

Um die Insassen eines Fahrzeugs, insbesondere den Fahrer des Fahrzeugs, zu unterstützen, sind verschiedene Assistenzsysteme bekannt. In Abhängigkeit vom Kontext des Fahrzeugs werden beispielsweise dem Fahrer Informationen zur Verfügung gestellt, welche es ihm erleichtern, die Fahraufgabe zu bewältigen. Zu solchen Assistenzsystemen gehören beispielsweise Navigationssysteme, Bahnführungssysteme wie eine automatische Abstandsregelung oder ein Fahrstreifenwechsel-Assistenzsystem. Außerdem sind Systeme bekannt, welche in zunehmendem Maße die Fahraufgabe teilweise oder vollständig autonom übernehmen.

Derartige Systeme sind z. B. adaptiv ausgebildet. Sie können insbesondere aus vorhergehenden Situationen lernen. Derzeit werden insbesondere adaptive Systeme eingesetzt, die entweder starr aus fixierten Expertenregeln bestehen oder auf Techniken der künstlichen Intelligenz bzw. des Maschinenlernens basieren. Im ersten Fall werden beim Design des Systems feste Verhaltensmuster definiert und mit Regeln beschrieben. In diesem Fall ist das System im eigentlichen Sinne nicht adaptiv. Es kann jedoch über Änderungen von Einstellungen angepasst werden. Derartige Systeme werden beispielsweise im Bereich des Infotainment und im Fahrerassistenzbereich im Automobilumfeld eingesetzt. Im zweiten Fall werden Datenmodelle auf weitestgehend historischen Daten trainiert. Auf Basis dieser Modelle wird die Anpassung des Systems abgeleitet.

Aus der US 2015/0294223 A1 ist beispielsweise ein System bekannt, bei dem Vorhersagealgorithmen verwendet werden, um Kontextinformationen für ein Ereignis zu erstellen. Die Ereignisaufzeichnung wird an ein Cloud-Speicher-System übertragen. In diesem System werden Rückschlüsse aus gespeicherten Ereignisprotokollen gezogen. Diese Rückschlüsse werden dann wieder anderen mobilen Endgeräten zur Verfügung gestellt.

Aus der WO 2017/067853 A1 ist ein Assistenzsystem für einen Fahrzeugnutzer bekannt, bei dem dem Nutzer Empfehlungen für die Nutzung des Fahrzeugs gegeben werden. Durch ein selbstlernendes System können Muster erkannt werden und auf Basis dieser Muster Empfehlungen ausgegeben werden.

Aus der DE 10 2007 025 352 A1 ist ein Fahrerinformationssystem für ein Kraftfahrzeug bekannt, bei dem ein personalisiertes adaptives Cockpit realisiert ist. In Abhängigkeit von einem Nutzerprofil können die dargestellten Informationen universell angepasst werden. Aus einer Vielzahl von im Betrieb des Fahrzeugs erfassten Informationen werden Kontexte ermittelt, welche Eigenschaften oder Handlungen des Fahrers oder eines Nutzers des Fahrzeugs berücksichtigen. In Abhängigkeit von diesen Kontexten wird eine Adaption des Cockpits durchgeführt.

Aus der US 2017/0190337 A1 ist ein Kommunikationssystem für ein Fahrzeug bekannt, welches die Ausgabe von Nachrichten an einen Fahrzeuginsassen steuert. Mittels Sensoren wird dabei der Fahrzeuginsasse überwacht. Die Ausgabe wird dann in Abhängigkeit von Parametern gesteuert, die aus dieser Überwachung des Fahrzeuginsassen gewonnen wurden.

Die US 9 288 270 B1 beschreibt ein Verfahren, bei dem ein System Vorlieben eines Nutzers erlernt und daraus Empfehlungen der Einstellungen eines Fahrzeugs generiert. Bei dem Verfahren werden Annahmen getroffen, daraus Entscheidungen abgeleitet, um daraufhin Maßnahmen zu ergreifen. Die Annahmen werden aus Daten erzeugt, die zu einem früheren Zeitpunkt gewonnen wurden. Für die Annahmen wird ein Konfidenzwert ermittelt und in Abhängigkeit von dem Konfidenzwert entschieden, ob eine bestimmte Einstellung automatisch oder nach Rückfrage bei dem Nutzer vorgenommen werden soll.

Die US 9 193 314 B1 beschreibt ein Steuerungssystem für ein Fahrzeug, bei dem erfasst wird, unter welchen Bedingungen ein Nutzer bestimmte Handlungen vornimmt. Wenn erfasst wurde, dass ein Nutzer wiederholt bestimmte Handlungen bei diesen Bedingungen vornimmt, speichert das System diese Handlungen in Verbindung mit den erfassten Bedingungen. Wenn das System dann dieselben Bedingungen zu einem späteren Zeitpunkt erfasst, werden die Handlungen automatisch ausgeführt.

Der vorliegenden Erfindung liegt daher die Aufgabe zugrunde, ein Verfahren und eine Vorrichtung der eingangs genannten Art bereitzustellen, bei welchen die Insassen des Fahrzeugs, insbesondere der Fahrer des Fahrzeugs, durch die Automatisierung einer Fahrzeugfunktion unterstützt wird, wobei sichergestellt wird, dass automatisiert ausgeführte Vorgänge tatsächlich den Präferenzen des Nutzers entsprechen.

Erfindungsgemäß wird diese Aufgabe durch ein Verfahren mit den Merkmalen des Anspruchs 1 und eine Vorrichtung mit den Merkmalen des Anspruchs 12 gelöst. Vorteilhafte Ausgestaltungen und Weiterbildungen ergeben sich aus den abhängigen Ansprüchen.

Bei dem erfindungsgemäßen Verfahren wird ein Kontext des Fahrzeugs ermittelt. In Abhängigkeit von dem ermittelten Kontext wird eine Regel eines regelbasierten Datensystems ausgewählt, wobei das regelbasierte Datensystem eine Vielzahl von Regeln umfasst. Jede Regel weist einen Bedingungsteil und einen Ergebnisteil auf, wobei der Bedingungsteil Bedingungen für den Kontext des Fahrzeugs umfasst. Ferner wird ein der ausgewählten Regel zugeordneter Konfidenzwert ermittelt, wobei der Konfidenzwert angibt, mit welcher Wahrscheinlichkeit das Regelergebnis der Regel der Präferenz des Nutzers entspricht. Daraufhin wird ein Regelergebnis der ausgewählten Regel erzeugt und in Abhängigkeit von dem erzeugten Regelergebnis ein Steuersignal erzeugt und ausgegeben. Das Steuersignal automatisiert eine Fahrzeugfunktion mit einem Automatisierungsgrad, wobei der Automatisierungsgrad von dem Konfidenzwert der ausgewählten Regel abhängt.

Durch das erfindungsgemäße Verfahren wird vorteilhafterweise eine Fahrzeugfunktion automatisiert, wobei der Automatisierungsgrad mittels des Konfidenzwertes in Abhängigkeit von der Wahrscheinlichkeit einer Präferenz eines Nutzers gewählt wird.

Unter dem Kontext des Fahrzeugs wird erfindungsgemäß insbesondere die Situation verstanden, in welcher sich das Fahrzeug befindet. Die Situation des Fahrzeugs kann sich aus der Umgebung des Fahrzeugs ableiten. Alternativ oder zusätzlich kann sich die Situation des Fahrzeugs aus Zuständen von Einrichtungen des Fahrzeugs ableiten. Schließlich kann der Kontext des Fahrzeugs von Daten beeinflusst werden, welche entfernt vom Fahrzeug, d. h. nicht aus der Umgebung des Fahrzeugs, gewonnen wurden und die an das Fahrzeug übertragen wurden.

Der Bedingungsteil beschreibt insbesondere die Situation, in der die Regel gültig ist. Der Ergebnisteil entspricht der mittels der Regel angenommenen Präferenz des Nutzers in dieser Situation bzw. in diesem Kontext. Derartige Regeln haben den Vorteil, dass sie maschineninterpretierbar sind und somit das Verhalten des Verfahrens bzw. des Systems exakt definieren. Ferner können sie jedoch auch in eine natürlichsprachliche Repräsentanz überführt werden. Diese natürlichsprachliche Repräsentanz wird erfindungsgemäß genutzt, um dem Nutzer die Logik einer Regel zu erklären und somit das Verhalten des Verfahrens bzw. des Systems zu plausibilisieren.

Der Konfidenzwert einer Regel kann beispielsweise ein relativer Wert von 0 bis 1 sein. Dieser Konfidenzwert beschreibt inwieweit das Verfahren bzw. das System sich sicher ist, dass das Regelergebnis der tatsächlichen Präferenz eines Nutzers entspricht. Auf diese Weise wird die Verlässlichkeit der Regel bewertet.

Gemäß einer Ausgestaltung des erfindungsgemäßen Verfahrens sind Schwellwerte definiert, welche angeben, bei welchem Konfidenzwert welcher Automatisierungsgrad durch das Steuersignal erzeugt wird. Auf diese Weise können verschiedene Stufen für den Automatisierungsgrad in Abhängigkeit von dem Konfidenzwert umgesetzt werden.

Der Automatisierungsgrad kann ferner von dem ermittelten Kontext abhängen. Beispielsweise kann bei einer sehr komplexen Fahraufgabe, zum Beispiel in einem unübersichtlichen Kreuzungsbereich, das Steuersignal allenfalls einen niedrigen Automatisierungsgrad aktivieren, wohingegen bei einer weniger komplexen Fahraufgabe, zum Beispiel auf einer Autobahn, ein hoher Automatisierungsgrad von dem Steuersignal aktiviert werden kann. In letzterem Fall ist beispielsweise ein Steuersignal erzeugbar, welches eine vollautomatische Durchführung der Fahraufgabe aktiviert. Diese Schwellwerte können für einen Nutzer individuell angepasst und trainiert werden.

Gemäß einer Weiterbildung des erfindungsgemäßen Verfahrens wird auf Basis des Bedingungsteils der ausgewählten Regel und des ermittelten Kontextes eine Nutzerausgabe erzeugt, welche die Anwendung der ausgewählten Regel für den Nutzer plausibilisiert. Diese erzeugte Nutzerausgabe wird dem Nutzer ausgegeben. Durch die Nutzerausgabe zur Plausibilisierung wird die Akzeptanz des Verfahrens durch ein hohes Maß an Transparenz erhöht. Der Nutzer kann zudem die Veränderung in dem Fahrzeug, welche durch das erzeugte Steuersignal erzeugt wurde, leichter nachvollziehen.

Bei dem erfindungsgemäßen Verfahren wird einer Regel, insbesondere einer ausgewählten Regel, des regelbasierten Datensystems ein Statuswert für einen Status zugeordnet. Dabei gibt der Statuswert an, wie der Konfidenzwert dieser Regel für diese Regel zu interpretieren ist. Der Status umfasst zumindest einen ersten, einen zweiten und einen dritten Statuswert. Bei dem ersten Statuswert wird die zugeordnete Regel automatisiert angewendet, bei dem zweiten Statuswert wird die zugeordnete Regel nicht automatisiert angewendet und bei dem dritten Statuswert wird die zugeordnete Regel in Abhängigkeit von dem Konfidenzwert der zugeordneten Regel angewendet.

Beim dritten Statuswert, wird die zugeordnete Regel in Abhängigkeit von dem Konfidenzwert der zugeordneten Regel angewendet.

Für diesen bestimmten Statuswert können für verschiedene Automatisierungsstufen verschiedene Ausgaben erzeugt werden. Dieser bestimmte Statuswert ist insbesondere der vorstehend genannte dritte Statuswert.

Beispielsweise kann bei dem dritten Statuswert aktiv ein Vorschlag zum Ausführen einer Bedienhandlung an den Nutzer zusammen mit einer Nutzerausgabe erzeugt werden, welche die angewendete Regel für den Nutzer plausibilisiert, wenn der Konfidenzwert in den niedrigsten Bereich fällt, d. h. insbesondere bei einem sehr geringen Konfidenzwert. Ferner kann bei dem dritten Statuswert aktiv ein Vorschlag zum Ausführen einer Bedienhandlung an den Nutzer ohne eine Nutzerausgabe erzeugt werden, welche die angewendete Regel für den Nutzer plausibilisiert, wenn der Konfidenzwert in einen zweitniedrigsten Bereich fällt, zum Beispiel bei einem geringen Konfidenzwert. Ferner kann bei dem dritten Statuswert aktiv das Steuersignal zum automatischen Ausführen einer Bedienhandlung zusammen mit einer Notifizierung und einer Nutzerausgabe, welche die angewendete Regel für den Nutzer plausibilisiert, erzeugt werden, wenn der Konfidenzwert in einen drittniedrigsten Bereich fällt, zum Beispiel bei einem mittleren Konfidenzwert. Des Weiteren kann bei dem dritten Statuswert aktiv das Steuersignal zum automatischen Ausführen einer Bedienhandlung zusammen mit einer Notifizierung jedoch ohne eine Nutzerausgabe, welche die angewendete Regel für den Nutzer plausibilisiert, erzeugt werden, wenn der Konfidenzwert in einen viertniedrigsten Bereich fällt, zum Beispiel bei einem hohen Konfidenzwert. Schließlich kann bei dem dritten Statuswert aktiv das Steuersignal zum automatischen Ausführen einer Bedienhandlung ohne eine Notifizierung und ohne eine Nutzerausgabe, welche die angewendete Regel für den Nutzer plausibilisiert, erzeugt werden, wenn der Konfidenzwert in einen fünftniedrigsten Bereich fällt, zum Beispiel bei einem sehr hohen Konfidenzwert. Vorteilhafterweise kann somit in Abhängigkeit von dem Konfidenzwert der Nutzer auf unterschiedliche Weise über die Automatisierung von Fahrfunktionen informiert werden. Gemäß einer weiteren Ausgestaltung des erfindungsgemäßen Verfahrens wird der Nutzer identifiziert und ein Grad der Nutzererfahrung ermittelt. Der Automatisierungsgrad hängt dann von dem ermittelten Grad der Nutzererfahrung ab. Vorteilhafterweise kann hierdurch der Automatisierungsgrad an die Bedürfnisse des Nutzers angepasst werden.

Gemäß einer Weiterbildung des erfindungsgemäßen Verfahrens wird in Abhängigkeit von dem ermittelten Kontext und von dem regelbasierten Datensystem eine Hypothese für ein Regelergebnis einer Regel des Datensystems erzeugt. Die erzeugte Hypothese wird dann mittels einer Nutzerschnittstelle ausgegeben. Anschließend wird eine Nutzereingabe zu der Ausgabe der Hypothese erfasst. Mittels der erfassten Nutzereingabe wird die ausgegebene Hypothese bewertet. In Abhängigkeit von der Bewertung der Hypothese wird dann das regelbasierte Datensystem automatisch adaptiert. In Abhängigkeit von dem ermittelten Kontext und von dem adaptierten regelbasierten Datensystem wird das Regelergebnis der Regel des Datensystems automatisch erzeugt. Anschließend wird dann das Steuersignal erzeugt und ausgegeben.

Das erfindungsgemäße Verfahren, insbesondere gemäß dieser Weiterbildung, nutzt die folgenden Konzepte, um Steuersignale zu erzeugen, welche eine verbesserte Unterstützung der Fahrzeuginsassen liefern:
Es wird ein regelbasiertes Datensystem verwendet, um Verhaltensmuster zu erlernen und situationsspezifische Hypothesen für das Systemverhalten abzuleiten. Des Weiteren wird eine kooperative Kopplung zwischen dem adaptiven System, d. h. insbesondere dem adaptierten regelbasierten Datensystem, und der Nutzerschnittstelle für eine nutzerzentrierte Bewertung der erzeugten Hypothesen verwendet. Schließlich wird ein Aufbau für das adaptive System gewählt, das komplexe Situationen über den Kontext erkennen kann und geeignete Hypothesen für ein Regelergebnis ableiten kann. Mittels der Lernfähigkeit, die über die Adaption des regelbasierten Datensystems bereitgestellt wird, kann das Verfahren an einen Nutzer adaptiert werden.

Bei dem erfindungsgemäßen Verfahren wird Gebrauch von der Nutzerschnittstelle gemacht, um Hypothesen für ein Regelergebnis durch den Nutzer zu validieren. Wird bei dem Verfahren eine wiederkehrende Hypothese zunehmend durch die erfasste Nutzereingabe bestärkt, kann die Nutzerschnittstelle erneut verwendet werden, um eine Hypothese generell von dem Nutzer bewerten zu lassen. Somit können aus hypothetischen Annahmen über mögliche Präferenzen eines Nutzers bestätigte Fakten werden, welche die Nutzerakzeptanz bezüglich des adaptiven Verfahrens erhöhen, weil das Verfahrens besser an den Nutzer angepasst wird. Vorteilhafterweise wird somit eine Kooperation von datenbasiertem Lernen bzw. datenbasiertem Ableiten von hypothetischem Wissen und einer Nutzerschnittstelle verwendet, um ein explizites Nutzerfeedback zu erhalten. Hierdurch werden die Nachteile von Verfahren, welche nur auf Maschinenlernen oder Algorithmen zur künstlichen Intelligenz basieren, vermieden.

Bei dem erfindungsgemäßen Verfahren ist die Wissensverwaltung über das adaptierte regelbasierte Datensystem und die Wissensanwendung über die Nutzerschnittstelle konzeptionell getrennt. Des Weiteren ermöglicht die Verwendung eines regelbasierten Datensystems vorteilhafterweise eine Zertifizierung des erfindungsgemäßen Verfahrens, da die Regeln des regelbasierten Datensystems nachvollziehbar sind. Eine solche Zertifizierbarkeit liegt beispielsweise bei Systemen mit neuronalen Netzen nicht vor, da nicht ohne Weiteres vorhersagbar ist, wie ein solches System auf bestimmte Bedingungen reagiert.

Durch die Ermittlung des Kontextes des Fahrzeugs kann vorteilhafterweise eine situationsgerechte Interaktion erreicht werden. Durch die Adaption des regelbasierten Datensystems ergibt sich über das Verfahren ein Lernprozess, wie und wann das Verfahren mit dem Nutzer in unterschiedlichen Kontexten interagieren bzw. kommunizieren soll. Beispielsweise kann das Verfahren das regelbasierte Datensystem so adaptieren, dass es einem Nutzer nur dringende und wichtige Informationen sehr gekürzt anbietet, wenn der Nutzer gerade auf der Autobahn fährt oder erfasst wurde, dass er sich in einer Fahrsituation befindet, die eine hohe Konzentration auf das Fahrgeschehen erfordert.

Weiterhin ergeben sich aus dem erfindungsgemäßen Verfahren die folgenden Vorteile:
Durch das Verfahren können individuelle situative Nutzerpräferenzen erlernt werden. Durch das Verfahren können verschiedenste Präferenzen eines individuellen Nutzers für unterschiedliche Situationen erlernt werden. Hierfür wird ein Hypothese erzeugt, ausgegeben und die Nutzereingabe hierzu erfasst. Aus dieser Nutzereingabe ergibt sich dann eine Adaption des regelbasierten Datensystems.

Bei dem Verfahren kann basierend auf einer zugrundeliegenden Regelmenge bei jeder Veränderung des aktuellen Kontextes die für diesen Kontext gültige Regel identifiziert werden. Daraus können mögliche Adaptionen des regelbasierten Datensystems abgeleitet werden, die hypothetisch den Präferenzen des Nutzers entsprechen. Auf diese Weise kann auch die Nutzerschnittstelle angepasst werden.

Mittels des Verfahrens kann ein dezidiertes Feedback eines Nutzers interpretiert werden, verarbeitet werden und das regelbasierte Datensystem kann dahingehend angepasst werden.

Gemäß einer Ausbildung des erfindungsgemäßen Verfahrens werden Messwerte von Sensoren und/oder Daten von Schnittstellen des Fahrzeugs erfasst. Der Kontext des Fahrzeugs wird in diesem Fall in Abhängigkeit von den erfassten Messwerten und/oder den erfassten Daten ermittelt. Mittels der Sensoren und/oder Schnittstellen werden insbesondere Messwerte und/oder Daten zu den aktuellen Verkehrsbedingungen, dem Verhalten des Fahrers, Interaktion des Fahrers mit einer weiteren Nutzerschnittstelle, den aktuellen Wetterbedingungen, den aktuellen Umgebungslichtverhältnissen, der aktuellen Jahreszeit und/oder der aktuellen Tageszeit erfasst. Diese Aufzählung ist nur beispielhaft; es können alle für das Fahrzeug und für die Fahrzeugführung relevanten Messwerte und Daten in geeigneter Weise erfasst und verarbeitet werden.

Über eine Schnittstelle des Fahrzeugs ist es gemäß einer Ausgestaltung des erfindungsgemäßen Verfahrens ferner möglich, so genanntes Flottenwissen in den Kontext des Fahrzeugs zu integrieren. Unter Flottenwissen werden Daten verstanden, die über eine Fahrzeugflotte, d. h. eine Vielzahl von Fahrzeugen, erhoben wurden und die Rückschlüsse auf den Kontext eines einzelnen Fahrzeugs zulassen. Mittels des Verfahrens kann das regelbasierte Datensystem auf Basis von Daten adaptiert werden, die von einer Vielzahl von Fahrzeugen erzeugt wurden. Auf diese Weise ist es auch möglich, das regelbasierte Datensystem nachträglich um neue Regeln zu erweitern. Vorteilhafterweise ist es hierdurch möglich, die Parametrisierung bestimmter Regeln des regelbasierten Datensystems in einer bestimmten geographischen Region oder unter bestimmten kontextuellen Einflüssen, wie Wetter, Klimaverhältnisse, Umgebungslicht oder Tageszeit, über eine Fahrzeugflotte hinweg zu überwachen, um eine neue Regel vorzuschlagen oder eine Initialparametrisierung einer Regel anzupassen.

Bei dem erfindungsgemäßen Verfahren kann durch die Adaption des regelbasierten Datensystems insbesondere für eine passende Regel ein genauer Wert des Bedingungsteils und des Ergebnisteils erlernt werden. Die Regel kann auf diese Weise parametrisiert werden, um die Nutzerpräferenz bestmöglich abzubilden. Ferner ist es möglich, datengetriebene Methoden einzusetzen, um neue Regeln zu erlernen. Die Hypothese kann somit eine Annahme für eine Präferenz des Nutzers für das Regelergebnis der Hypothese bei dem ermittelten Kontext umfassen.

Der Konfidenzwert kann sich ferner während der Ausführung des Verfahrens ändern. Er ist somit Teil der Adaption des regelbasierten Datensystems. Die Veränderung kann dabei als Folge von aktiven Interaktionen mit einem Nutzer erfolgen. Insbesondere kann sich der Konfidenzwert nach einer bestimmten Nutzereingabe verändern.

Bei den Regeln des Datenmodells handelt es sich um Annahmen über mögliche Präferenzen des Nutzers. Das Verfahren leitet somit basierend auf den Regeln und den Hypothesen mögliche hypothetische Präferenzen für einen Kontext ab, die mit einer bestimmten Konfidenz, d. h. mit einer gewissen Wahrscheinlichkeit, der tatsächlichen Präferenz des Nutzers entsprechen. Da der Konfidenzwert bei dem Verfahren zunächst basierend auf den zuvor erfassten Daten über den Kontext, d. h. zum Beispiel über situative Nutzerinteraktionen, berechnet wird, handelt es sich hierbei immer um hypothetisches Wissen, welches über die Nutzerpräferenzen vorliegt. Wenn nun bei dem erfindungsgemäßen Verfahren für einen Kontext eine Hypothese abgeleitet wurde, die der Nutzerpräferenz am Wahrscheinlichsten entspricht, interagiert das Verfahren durch die Nutzerschnittstelle mit dem Nutzer, um aus hypothetischen Annahmen bestätigte Fakten zu machen. Hierbei wird eine Nutzerschnittstelle genutzt, um dem Nutzer zum Beispiel eine Empfehlung zu geben, die er bestätigen kann. Ferner kann beispielsweise dem Nutzer angeboten werden, dass eine bestimmte Regel in Zukunft immer automatisiert angewendet wird. Der Nutzer kann durch eine Nutzereingabe dieser Automatisierung zustimmen. Durch die Adaption des regelbasierten Datensystems liegt dann eine Gewissheit über die Korrektheit dieser Regel vor und der Nutzer kann fortan mit der Ausführung dieser Regel unterstützt werden. Somit wird die Nutzerschnittstelle genutzt, um explizites Feedback des Nutzers für hypothetische Annahmen zu erfragen und um die Adaption des regelbasierten Datensystems so vorzunehmen, dass es zunehmend auf den Nutzer angepasst wird. Für den Fall, dass der Nutzer durch eine Nutzereingabe einer Regel widerspricht, kann das regelbasierte Datensystem so adaptiert werden, dass die Konfidenz der Regel reduziert wird, um die Regel fortan seltener anzuwenden. Hierdurch wird vorteilhafterweise die Nutzerakzeptanz erhöht, da das regelbasierte Datensystem konkrete Gewissheit über mögliche Präferenzen des Nutzers erfahren kann.

Die Nutzereingabe kann somit eine Bestätigung oder eine Ablehnung der Hypothese umfassen. Bei einer Ablehnung der Hypothese wird insbesondere der Konfidenzwert der zu der Hypothese gehörigen Regel verringert. Bei einer Bestätigung der Hypothese wird der Konfidenzwert der zu der Hypothese gehörigen Regel erhöht. Außerdem kann die Nutzereingabe oder es können mehrere Nutzereingabe eine Aktivierung oder Deaktivierung der zu der Hypothese gehörigen Regel induzieren.

Wenn gemäß einer Weiterbildung des erfindungsgemäßen Verfahrens der Nutzer identifiziert wird, kann das regelbasierte Datensystem auch nutzerspezifisch adaptiert werden. Vorteilhafterweise ist es hierdurch möglich, das Verfahren schnell an einen Erstnutzer anzupassen, ohne dass zuvor Daten über Interaktionen dieses Nutzers erfasst wurden. Das nutzerspezifisch ausgestaltete regelbasierte Datensystem kann über eine Schnittstelle des Fahrzeugs geladen werden, sobald ein Nutzer in dem Fahrzeug identifiziert worden ist. Das nutzerspezifische regelbasierte Datensystem kann für einen bestimmten Nutzer somit auch in Mietfahrzeugen, Zweitfahrzeugen oder Folgefahrzeugen genutzt werden. Außerdem lässt sich ein solches regelbasiertes Datensystem auf eingeschränktere oder potentere Fahrzeugplattformen applizieren. Im Gegensatz zu neuronalen Netzen lassen sich Regelmengen nämlich leicht auf kleinere Domänen einschränken oder in größere Domänen einbetten. Auch bei abweichender Funktionsausprägung einer nachfolgenden Fahrzeugplattform sind funktionsspezifische Transformationsmodelle auf die Parametrisierung des Regelsatzes anwendbar, die das regelbasierte Datenmodell an die neue Fahrzeugplattform adaptieren. Vorteilhafterweise ist das von dem Verfahren genutzte regelbasierte Datensystem somit besonders gut übertragbar.

Das Verfahren ist in diesem Fall sehr nutzerzentriert ausgelegt. Hierdurch wird die ökonomische Entwicklung und die Nachhaltigkeit des erfindungsgemäßen Verfahrens sichergestellt. Es kann dem Nutzer jahrelang über die gesamte Nutzungszeit hinweg einen Mehrwert bieten. Mittels des Verfahrens können die Präferenzen des Nutzers korrekt erlernt werden, um den Nutzer in dem richtigen Moment und in der richtigen Situation die Steuersignale für eine gewünschte Funktion oder Information auf die gewünschte Interaktionsart anzubieten. Hierdurch wird vorteilhafterweise die Akzeptanz des erfindungsgemäßen Verfahrens erhöht.

Gemäß einer weiteren Ausgestaltung des erfindungsgemäßen Verfahrens werden außerdem hypothesenunabhängige Nutzereingaben erfasst, die unabhängig von der Ausgabe einer Hypothese sind. Die hypothesenunabhängigen Nutzereingaben werden bewertet und in Abhängigkeit von dem Ergebnis der Bewertung wird das regelbasierte Datensystem automatisch adaptiert. Auf diese Weise ist das regelbasierte Datensystem des erfindungsgemäßen Verfahrens individualisierbar. Der Nutzer kann das Verhalten des Verfahrens ergänzend definieren. Dies ist insbesondere deswegen möglich, da eine Regel durch den Nutzer nachvollziehbar ist. Der Nutzer kann daher Regeln gezielt verändern oder mittels der Nutzerschnittstelle neue Regeln ergänzen, die das Verfahren erweitern.

Die erfindungsgemäße Vorrichtung zum Erzeugen von Steuersignalen zum Unterstützen von Insassen eines Fahrzeugs umfasst eine Kontext-Ermittlungseinheit zum Ermitteln des Kontextes des Fahrzeugs. Ferner umfasst sie eine Ergebniseinheit, die ausgebildet ist, in Abhängigkeit von dem ermittelten Kontext eine Regel eines regelbasierten Datensystems auszuwählen, wobei das regelbasierte Datensystem eine Vielzahl von Regeln umfasst, wobei jede Regel einen Bedingungsteil und einen Ergebnisteil aufweist, wobei der Bedingungsteil Bedingungen für den Kontext des Fahrzeugs umfasst. Die Ergebniseinheit ist ferner ausgebildet, ein Regelergebnis der ausgewählten Regel zu erzeugen. Des Weiteren umfasst die Vorrichtung eine Konfidenz-Ermittlungseinheit, die ausgebildet ist, einen der ausgewählten Regel zugeordneten Konfidenzwert zu ermitteln, wobei der Konfidenzwert angibt, mit welcher Wahrscheinlichkeit das Regelergebnis der Regel der Präferenz des Nutzers entspricht. Schließlich umfasst die Vorrichtung eine Ausgabeeinheit zum Erzeugen und Ausgeben eines Steuersignals in Abhängigkeit von dem erzeugten Regelergebnis, wobei das Steuersignal eine Fahrzeugfunktion mit einem Automatisierungsgrad automatisiert, wobei der Automatisierungsgrad von dem Konfidenzwert der ausgewählten Regel abhängt. Bei der erfindungsgemäßen Vorrichtung ist einer Regel des regelbasierten Datensystems ein Statuswert für einen Status zugeordnet, wobei der Statuswert angibt, wie der Konfidenzwert dieser Regel für diese Regel zu interpretieren ist. Der Status umfasst dabei zumindest einen ersten, einen zweiten und einen dritten Statuswert, wobei bei dem ersten Statuswert die zugeordnete Regel automatisiert angewendet wird, bei dem zweiten Statuswert die zugeordnete Regel nicht automatisiert angewendet wird und bei dem dritten Statuswert die zugeordnete Regel in Abhängigkeit von dem Konfidenzwert der zugeordneten Regel angewendet wird.

Die erfindungsgemäße Vorrichtung ist insbesondere ausgebildet, das erfindungsgemäße Verfahren auszuführen. Sie weist somit dieselben Vorteile wie das erfindungsgemäße Verfahren auf.

Ferner betrifft die Erfindung ein Computerprogrammprodukt, umfassend Befehle, die bei der Ausführung durch zumindest einen Computer diesen veranlassen, das erfindungsgemäße Verfahren auszuführen.

Das erfindungsgemäße Verfahren und die erfindungsgemäße Vorrichtung sind für einen Entwickler besonders gut handhabbar. Das regelbasierte Datensystem des Verfahrens bzw. der Vorrichtung ist insbesondere dahingehend handhabbar, dass der Entwickler explizit definieren kann, wie sich das Verfahren bzw. die Vorrichtung bei definierten Ereignissen verhalten soll. Beispielsweise kann der Entwickler im Voraus definieren, dass bei einem Ereignis, bei dem der Nutzer eine Systemanpassung ablehnt, das System für einen fest definierten Zeitraum die Systemanpassung nicht mehr vornimmt.

Durch die Verwendung eines regelbasierten Datensystems ist das Verfahren und die Vorrichtung zertifizierbar. Diese Zertifizierbarkeit ist bereits vor Ausführung des Verfahrens bzw. vor dem Einsatz der Vorrichtung möglich. Es kann auf diese Weise sichergestellt werden, dass die Vorrichtung und das Verfahren kein Verhalten zeigt, erlernt oder annimmt, das unerwünscht ist. Dies ist insbesondere bei automatisierten Fahrfunktionen wichtig. Dies wird durch die Nutzung eines regelbasierten Datensystems gewährleistet, da die Adaption explizit in der Menge der Regeln definiert ist. Somit ist die Adaption der Regeln schon vor der Ausführung des Verfahrens bekannt und kann dahingehend zertifiziert und freigegeben werden. Das Verfahren und die Vorrichtung werden keine Adaption vornehmen, die zuvor nicht definiert wurden.

Außerdem kann das regelbasierte Datensystem initial definiert werden. Hierbei ist es noch nicht erforderlich, dass Daten über die Interaktion eines Nutzers erfasst worden sind. Somit können auch Erstnutzer der Vorrichtung und des Verfahrens direkt von den erzeugten Steuersignalen profitieren. Zusätzlich kann der Status und die Konfidenz einer Regel initial definiert werden, so dass das Verfahren und die Vorrichtung bei der initialen Interaktion mit dem Nutzer bereits Steuersignale erzeugen können, ohne dass der Nutzer zuvor über eine längere Zeit die Vorrichtung bzw. das Verfahren genutzt haben muss und ohne dass bereits Daten erfasst wurden. Für die initiale Implementierung des Verfahrens bzw. der Vorrichtung kann beispielsweise Expertenwissen integriert werden. Es können beispielsweise durch Experten definierte Regeln, welche die sinnvolle Nutzung von Systemen des Fahrzeugs beschreiben, initial als Regeln mit hoher Konfidenz initialisiert werden. Auch für einen unerfahrenen Nutzer können auf diese Weise hilfreiche Steuersignale auch zu Funktionen erzeugt werden, die der Nutzer zuvor noch nicht genutzt hat. Beispielsweise kann einem Nutzer die Aktivierung eines Assistenzsystems empfohlen werden, wenn sich die Nutzung dieses Systems im aktuellen Kontext empfiehlt. Derartige Empfehlungen können auch aus Flottendaten abgeleitet werden.
- Figur 1: zeigt den grundsätzlichen Aufbau eines Ausführungsbeispiels der erfindungsgemäßen Vorrichtung und
- Figur 2: zeigt den Ablauf eines Ausführungsbeispiels des erfindungsgemäßen Verfahrens.

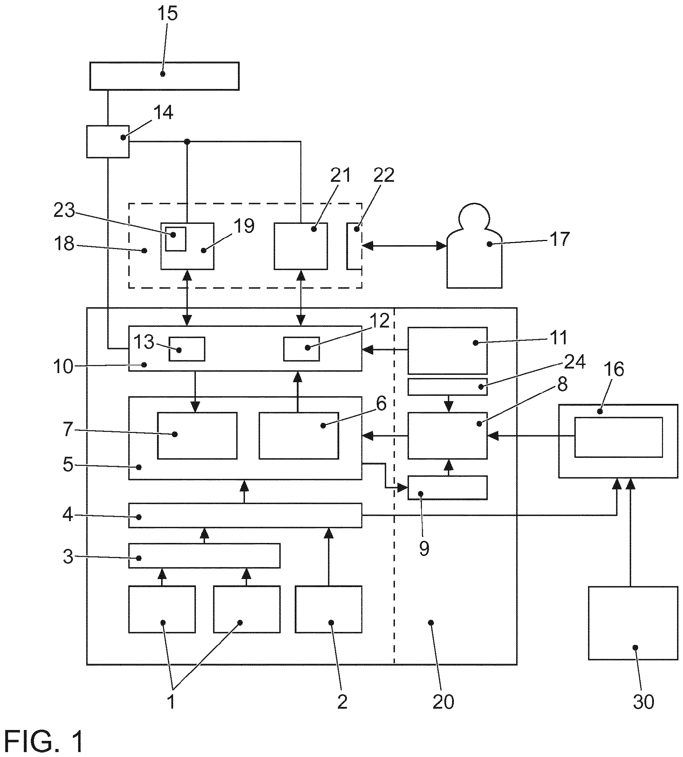

Zunächst wird mit Bezug zu Figur 1 der Aufbau der erfindungsgemäßen Vorrichtung beschrieben:
Die erfindungsgemäße Vorrichtung wird allgemein von einem adaptiven System 20 und den Kopplungen dieses adaptiven Systems 20 mit weiteren Einrichtungen in einem Fahrzeug und außerhalb des Fahrzeugs bereitgestellt.

Das Fahrzeug umfasst eine Vielzahl von Sensoren 1 und Schnittstellen 2, mit denen Messwerte und Daten erfasst werden können. Die Sensoren 1 können beispielsweise Messwerte zu den aktuellen Wetterbedingungen, den aktuellen Umgebungslichtverhältnissen, der aktuellen Jahreszeit und der aktuellen Tageszeit umfassen. Außerdem können Sensoren 1 vorgesehen sein, welche das Verhalten des Fahrers überwachen und Interaktionen des Fahrers mit einer Nutzerschnittstelle erfassen. Des Weiteren können die Sensoren 1 Messwerte zu Fahrparametern liefern, wie beispielsweise die aktuelle Geschwindigkeit, einen etwaigen Schlupf der Räder und weitere Messwerte, die üblicherweise von an sich bekannten Fahrerassistenzsystemen ausgewertet werden. Über die Schnittstellen 2 können Daten zu den aktuellen Verkehrsbedingungen im Umfeld des Fahrzeugs oder auf der Route eines Fahrzeugs sowie regionale Wetterbedingungen empfangen werden. Die Schnittstellen 2 können auch die Übertragung von Daten über das Mobilfunknetz oder das Internet ermöglichen, um das Fahrzeug mit externen Diensten zu koppeln, welche in einer Cloud oder auf einem zentralen Server des Fahrzeugherstellers betrieben werden. Auf diese Weise können jegliche Daten an das Fahrzeug übertragen werden, welche für den Kontext des Fahrzeugs relevant sind.

Außerdem können die Schnittstellen 2 eine Kopplung mit mobilen Geräten innerhalb des Fahrzeugs herstellen. Des Weiteren kann über die Schnittstellen 2 eine Kommunikation mit anderen Fahrzeugen oder Infrastruktureinrichtungen, wie zum Beispiel Verkehrsleitsystemen und Ampeln, möglich sein.

Mittels der Sensoren 1 oder der Schnittstellen 2 kann auch ein bestimmter Nutzer 17, der Insasse des Fahrzeugs ist, identifiziert werden. Beispielsweise ist einer der Sensoren 1 als Nutzer-Identifikationseinheit ausgebildet. Alternativ wird der Nutzer über eine Schnittstelle, beispielsweise durch eine Eingabe, identifiziert. Auf diese Weise können alle Adaptionen, welche im Folgenden beschrieben werden, nutzerspezifisch ausgeführt werden.

Die Sensoren 1 sind mit einer Extraktionseinheit 3 gekoppelt, mittels welcher die Rohdaten der Messwerte der Sensoren 1 in Daten zu höherwertigen Merkmalen konvertiert werden können.

Beispielsweise kann mittels eines Sensors 1 fortwährend die aktuelle Geschwindigkeit erfasst werden. Die Extraktionseinheit 3 kann in diesem Fall diese schnell veränderlichen Daten kontinuierlich analysieren und die Information ableiten, dass der Nutzer seit einem bestimmten Zeitpunkt mit einer konstanten Geschwindigkeit fährt. Die Extraktionseinheit 3 ermöglicht es dem adaptiven System 20 neben dem Erfassen von Rohdaten komplexe Situationen in hochdynamischen heterogenen Daten über den Fahrer, das Fahrzeug und die Umwelt zu erfassen und zu erkennen. Die Extraktionseinheit 3 kann dabei Technologien der künstlichen Intelligenz (z. B. Deep Learning, Time Series Analysis) verwenden.

Die mittels der Extraktionseinheit 3 gewonnenen Daten werden an eine Kontextdaten-Ermittlungseinheit 4 übertragen. Gleichermaßen werden auch die über die Schnittstellen 2 empfangenen Daten an diese Kontextdaten-Ermittlungseinheit 4 übertragen. In der Kontextdaten-Ermittlungseinheit 4 werden alle verfügbaren von den Sensoren 1 und den Schnittstellen 2 übertragenen Daten analysiert und gegebenenfalls aggregiert. Die Kontextdaten-Ermittlungseinheit 4 erzeugt eine kontinuierlich angepasste Beschreibung, in welchem Kontext sich das Fahrzeug befindet. Es wird insbesondere die aktuelle Situation ermittelt, in der sich das Fahrzeug befindet. Der ermittelte Kontext des Fahrzeugs wird zum einen an ein Adaptivmodul 5 des adaptiven Systems 20 übertragen und zum anderen über eine geeignete Schnittstelle an ein externes Musterlernmodul 16.

Das Adaptivmodul 5 umfasst wiederum eine Hypothesen-Erzeugungseinheit 6 und eine Bewertungseinheit 7. Die Hypothesen-Erzeugungseinheit 6 ist ausgebildet, in Abhängigkeit von dem von der Kontextdaten-Ermittlungseinheit 4 ermittelten Kontext und in Abhängigkeit von einem regelbasierten Datensystem 8, mit welchem das Adaptivmodul 5 gekoppelt ist, eine Hypothese für ein Regelergebnis einer Regel des Datensystems 8 zu erzeugen.

Das regelbasierte Datensystem 8 ist ein Speicher, in dem eine Vielzahl von Regeln strukturiert gespeichert sind. Jede Regel weist dabei einen Bedingungsteil und einen Ergebnisteil auf, wobei der Bedingungsteil Bedingungen für den Kontext des Fahrzeugs umfasst. Das regelbasierte Datensystem 8 enthält somit die Menge der Regeln, die definieren, wie sich das adaptive System 20 in verschiedenen Situationen verhält. Weiterhin umfasst es Informationen für jede Regel bezüglich ihrer Konfidenz und ihres Status, wie es später erläutert wird. Das regelbasierte Datensystem 8 lässt sich in Subsysteme unterteilen, die sich in der Herkunft ihrer Regeln unterscheiden. Das regelbasierte Datensystem 8 ist ferner mit dem externen Musterlernmodul 16 gekoppelt. Über dieses externe Musterlernmodul 16 können neue Regeln definiert und an das regelbasierte Datensystem 8 übertragen werden.

Die Hypothesen-Erzeugungseinheit 6 greift auf die Regeln des regelbasierten Datensystems 8 zu. Sie kann die Regelmenge des Datensystems 6 anhand der aktuellen Situation bzw. des aktuellen Kontexts auflösen. In jeder Situation iteriert die Hypothesen-Erzeugungseinheit 6 über die Menge der Regeln des regelbasierten Datensystem 8 und identifiziert die für den Kontext passenden Regeln. Die Regelergebnisse dieser Menge identifizierter Regeln stellt eine Menge von Hypothese über die Präferenzen des Nutzers für den aktuellen Kontext bzw. die aktuelle Situation dar. Jede dieser identifizierten und für den Kontext passenden Regeln sowie deren Regelergebnisse werden in Form einer Liste von Hypothesen an eine Nutzerschnittstellensteuerung 10 übertragen.

Die Nutzerschnittstellensteuerung 10 umfasst eine Hypothesen-Verarbeitungseinheit 12 und eine Ergebniseinheit 13. Ferner ist die Nutzerschnittstellensteuerung 10 mit einem Nutzerschnittstellenmodell 11 gekoppelt.

Die von der Hypothesen-Erzeugungseinheit 6 empfangenen Hypothesen werden von der Hypothesen-Verarbeitungseinheit 12 verarbeitet. Die Hypothesen-Verarbeitungseinheit 12 bestimmt, wie sich das adaptive System 20 in Abhängigkeit von einer Hypothese verhalten soll. Hierfür entscheidet es auf Basis der Konfidenz und des Status einer jeden Regel, auf welcher die Hypothese basiert, ob die Regel eine mögliche Präferenz eines individuellen Nutzers darstellt. Ferner entscheidet die Hypothesen-Verarbeitungseinheit 12 auf dieser Basis, ob eine Regel, auf welcher die Hypothese basiert, automatisch ausgeführt wird, dem Nutzer die Anwendung der zugrundeliegenden Regel angeboten oder empfohlen wird und wie mit dem Nutzer zu interagieren ist. Dabei entscheidet die Nutzerschnittstellensteuerung 10 auch, über welche Nutzerschnittstelle mit dem Nutzer interagiert werden soll. Als Nutzerschnittstellen 18 können beispielsweise eine graphische Nutzerschnittstelle 19 und eine Sprachschnittstelle 21 vorgesehen sein.

Die Hypothesen-Verarbeitungseinheit 12 kann beispielsweise entscheiden, dass der Nutzer über die automatische Aktivierung der Sitzheizung über die Sprachschnittstelle 21 mittels der Ausgabe synthetisierter Sprache informiert wird. Dabei kann die Anwendung der Regel, auf welcher die Hypothese beruht, dem Nutzer plausibilisiert werden, indem der Grund angegeben wird, warum die Sitzheizung automatisch aktiviert wird. Beispielsweise kann per Sprache ausgegeben werden, dass der Nutzer die Sitzheizung in letzter Zeit häufig genutzt hat, wenn die Außentemperatur der aktuellen Temperatur entsprach. Die konkrete Entscheidungslogik hierfür und die Daten darüber, wie eine Regel in natürliche Sprache überführt wird, ist in dem Nutzerschnittstellenmodell 11 definiert und modelliert. Eine Alternative zu der sprachbasierten Informationsausgabe für den Nutzer ist zum Beispiel die Darstellung der Information mittels einer graphischen Nutzerschnittstelle 19, dass die Sitzheizung aktiviert wurde. Dabei kann auch eine Schaltfläche angezeigt werden, mittels derer die Ausführung rückgängig gemacht werden kann. Falls dem Nutzer die Ausführung einer bestimmten Regel, auf welcher die Hypothese beruht, empfohlen wird, kann die Hypothesen-Verarbeitungseinheit 12 die Sprachschnittstelle 21 nutzen, um dem Nutzer die Empfehlung aktiv anzubieten und mit dem Nutzer einen Dialog darüber zu führen. Wenn der Nutzer beispielsweise fragt, warum das adaptive System 20 gefolgert hat, dass er die Sitzheizung wohl nutzen möchte, kann die Hypothesen-Verarbeitungseinheit 12 dies mittels der Sprachschnittstelle 21 erklären. Sollte der Nutzer zwei aufeinanderfolgende Empfehlungen des adaptiven Systems 20 ignoriert haben, kann die Hypothesen-Verarbeitungseinheit 12 beispielsweise entscheiden, dass für eine definierte Zeit für diesen Nutzer keine weitere Regel ausgeführt wird.

Die Hypothesen-Verarbeitungseinheit 12 ist somit eingerichtet festzulegen, wann und in welchen Zyklen aus impliziten Feedbackhandlungen gelernt werden soll, ob eine bestimmte Regel zu einem aktuellen Nutzer 17 passt, welcher zuvor identifiziert wurde. Beispielsweise kann für die Funktion der Sitzheizung des Fahrzeugs definiert sein, dass nur die ersten zwei Minuten jeder Fahrt auf Basis von implizitem Wissen gelernt werden soll, ob eine Regel für die Sitzheizungsfunktion zu einem Nutzerinteraktionsmuster passt. Wenn innerhalb der ersten zwei Minuten eine bestimmte Regel in einer bestimmten Situation, welche sich aus dem Kontext ergibt, gültig ist und der Nutzer 17 die Sitzheizung selbst initiiert aktiviert, wird die Regel als passend interpretiert und eine Adaption der Regel angestoßen. Wenn für eine bestimmte Regel in der Hypothesen-Verarbeitungseinheit 12 ein zyklisches Lernen definiert ist, wird in einem zuvor definierten Zyklus die Adaption der Regel angestoßen, so lange die Bedingungen hierfür erfüllt sind.

Das Nutzerschnittstellenmodell 11 wird im Voraus festgelegt. Dabei wird definiert, wie mit einer spezifischen Regel bzw. einer spezifischen Hypothese einer bestimmten Funktion oder Domäne mit einer bestimmten Konfidenz bei gegebenem Status verfahren werden muss. Es ist somit festgelegt, wie die Nutzerschnittstellen 18 zwecks Kommunikation des Systemverhaltens eingesetzt werden. Weitergehend wird definiert, wie eine Regel oder eine Hypothese sinnvoll in natürliche Sprache überführt werden kann. Hierfür können in dem Nutzerschnittstellenmodell 11 diverse Textbausteine gespeichert sein oder es wird ein Generator für natürliche Sprache verwendet. Beispiele für Textbausteine sind der Name eines Sensors 1, der Bedingungswert der Regel für einen Sensor 1, der aktuelle tatsächliche Wert des Sensors 1, der Name eines Aktors und der zu setzende Wert des Aktors. Weiterhin kann in dem Nutzerschnittstellenmodell 11 definiert werden, dass das adaptive System 20 beispielsweise für eine definierte Zeit mit der Ausführung von Regeln für eine bestimmte Domäne aussetzt, wenn der Nutzer 17 mehrfach die Ausführung von Regeln dieser Domäne ignoriert hat. Die Domänen können verschiedene Bereiche zu Funktionen des Fahrzeugs voneinander abgrenzen.

Die Nutzerschnittstellen 18 umfassen allgemein eine Menge verfügbarer Nutzerschnittstellen, um mit dem Nutzer zu interagieren. Die Nutzerschnittstellen 18 werden dabei von der Nutzerschnittstellensteuerung 10 angesteuert. Auf diese Weise wird dem Nutzer 17 eine Regelausführung kommuniziert, angeboten oder es wird ein Feedback des Nutzers erfragt oder der Nutzer wird über eine Automatisierung informiert. Dabei werden dem Nutzer 17 geeignete Nutzereingabe angeboten, um Einfluss auf die Bewertung einer Hypothese oder die Ausführung einer Regel zu entnehmen.

Die Nutzerschnittstellen 18 können insbesondere, gesteuert von der Nutzerschnittstellensteuerung 10, die von der Hypothesen-Erzeugungseinheit 6 erzeugte Hypothese ausgeben. Auf eine solche Ausgabe der Hypothese kann eine Nutzereingabe mittels einer Eingabeeinheit 22 erfasst werden. Die Eingabeeinheit 22 ist auch Teil der Nutzerschnittstellen 18.

Die Nutzereingabe bzw. allgemein das Nutzerfeedback als Antwort auf die Ausgabe einer Hypothese kann auf verschiedene Weise erfolgen. Beispielsweise kann der Nutzer eine Empfehlung, die in der ausgegebenen Hypothese enthalten ist, ignorieren. Er kann eine solche Empfehlung auch explizit ablehnen oder hinterfragen. Insbesondere kann eine empfohlene Automatisierung hinterfragt werden. Des Weiteren kann der Nutzer eine in der Hypothese enthaltene Empfehlung akzeptieren oder eine Automatisierung ignorieren. Des Weiteren kann der Nutzer eine Automatisierung rückgängig machen. Schließlich kann der Nutzer ein dezidiertes Feedback zu einer Empfehlung oder einer Automatisierung geben, indem er zum Beispiel den Bedingungsteil oder den Ergebnisteil einer bestimmten Regel, auf welcher die Hypothese beruht, anpasst. Beispielsweise kann der Nutzer eingeben, dass die Sitzheizung statt bei 12 °C schon bei 13 °C aktiviert werden soll und statt die Stufe 2, die Stufe 3 aktiviert werden soll.

Das explizite Feedback des Nutzers 17 über die Nutzereingabe wird an die Hypothesen-Verarbeitungseinheit 12 der Nutzerschnittstellensteuerung 10 übertragen, welche es wiederum zurück an das Adaptivmodul 5 überträgt. In dem Adaptivmodul 5 wird dieses Nutzerfeedback der Nutzereingabe in der Bewertungseinheit 7 verarbeitet. Die Bewertungseinheit 7 ist ausgebildet, eine weitere Bewertung der zuvor ausgegebenen Hypothese vorzunehmen. Die Bewertungseinheit 7 wird dabei durch die Daten unterstützt, welche von der Hypothesen-Verarbeitungseinheit 12 übertragen wurden. Die Bewertungseinheit 7 ist insbesondere ausgebildet, mittels der erfassten Nutzereingabe die zuvor ausgegebene Hypothese zu bewerten.

Die Bewertungseinheit 7 ist ausgebildet, zu lernen, welche Regeln bzw. Hypothesen mit welcher Parametrisierung zu einem individuellen Nutzer 17 passen und somit seinen Präferenzen entsprechen. Die Bewertungseinheit 7 gewährleistet somit die Adaptivität des adaptiven Systems 20.

Die Bewertung einer Hypothese wird von der Bewertungseinheit 7 an die Adaptionseinheit 9 übertragen. In Abhängigkeit von der Bewertung einer ausgegebenen Hypothese kann die Adaptionseinheit 9 automatisch die Regeln des regelbasierten Datensystems 8 adaptieren. Mittels der Adaptionseinheit 9 kann somit eine Hypothese, welche zuvor von der Hypothesen-Erzeugungseinheit 6 erzeugt und von der Bewertungseinheit 7 validiert wurde, genutzt werden, um das regelbasierte Datensystem 8 zu adaptieren.

Das automatisierte Lernen und die Adaption des Systems 20 kann dabei auf der Basis von zwei Informationsklassen statt. Die Bewertungseinheit 7 kann Interaktionen eines Nutzers auswerten und darüber ein implizites Feedback erhalten. Ferner kann die Bewertungseinheit 7 wie vorstehend beschrieben ein explizites Nutzerfeedback zu ausgegebenen Hypothesen erhalten.

Ein implizites Feedback erhält die Bewertungseinheit 7 über Daten, die bei Interaktionen mit dem Nutzer 17 erfasst werden. Die Bewertungseinheit 7 erhält von der Kontextdaten-Ermittlungseinheit 4 bestimmte Kontextdaten, die eine Beschreibung der Situation liefern, in der sich das Fahrzeug befindet. Es kann nun erfasst werden, in welcher Situation der Nutzer eine Funktion selbst initiiert nutzt und wie er sie einstellt. Diese erfassten Informationen werden als implizites Feedback bezeichnet. Die Bewertungseinheit 7 erfasst beispielsweise, wann Nutzerinitiiert die Sitzheizung aktiviert wird und prüft, welche der Regeln des regelbasierten Datensystems 8 diesem Muster entsprechen. Sollte eine der Regeln zu diesem Muster in dem implizierten Feedback passen, kann die Bewertungseinheit 7 daraus folgern, dass diese Regel mit größerer Wahrscheinlichkeit der Präferenz des Nutzers 17 entspricht. Über die Adaptionseinheit 9 kann die Bewertungseinheit 7 in diesem Fall den Konfidenzwert der entsprechenden Regel erhöhen. So würde zum Beispiel nach mehrfacher Aktivierung der Sitzheizung durch den Nutzer 17 in der immer gleichen Situation der Konfidenzwert so angestiegen sein, dass mittels der Hypothesen-Erzeugungseinheit 6 und der Hypothesen-Verarbeitungseinheit 12 entschieden wird, eine Ausgabe zu erzeugen, die dem Nutzer empfiehlt, die entsprechende Regel auszuführen oder sie sogar für ihn zu automatisieren.

Unter einem expliziten Nutzerfeedback wird verstanden, dass auf die Ausgabe einer Hypothese der Nutzer 17 eine Nutzereingabe tätigt, welche angibt, wie die Hypothese zu bewerten ist. Das adaptive System 20 kann auf diese Weise lernen, inwiefern die Regel, welche zu dieser Hypothese gehört, der Nutzerpräferenz entspricht und dann mittels der Adaptionseinheit 9 das regelbasierte Datensystem 8 entsprechend anzupassen.

Im Folgenden werden Details erläutert, wie eine Adaption einer Regel initiiert wird und auf welche Weise eine Regel dann adaptiert wird:
Für die Adaption der Regel umfasst die Adaptionseinheit 9 eine Instanz, die definiert, wie basierend auf implizitem und explizitem Feedback des Nutzers 17 erlernt wird, ob eine Regel den Präferenzen dieses Nutzers 17 entspricht. Die Adaption wird angestoßen, wenn entweder das Muster der jeweiligen Regel in dem impliziten Feedback des Nutzers 17 festgestellt wurde und die Bewertungseinheit 7 den Adaptionsvorgang anstößt oder wenn der Nutzer 17 ein explizites Feedback durch eine Nutzereingabe über die Nutzerschnittstellen 18 zu einer bestimmten Regel gibt.

Die Regeln des regelbasierten Datensystems 8 umfassen einen Bedingungsteil und einen Ergebnisteil. Der Bedingungsteil umfasst Bedingungen für den Kontext des Fahrzeugs, bei dem die Regel ausgeführt wird. Die Wahrscheinlichkeit dafür, dass die Ausführung der Regel den Präferenzen des Nutzers 17 entspricht, wird anhand eines Konfidenzwerts der Regel angegeben. Dieser Konfidenzwert wird mittels einer Konfidenzwert-Ermittlungseinheit 23 ermittelt, die mit dem regelbasierten Datensystem 8 verbunden ist. Bei der Adaption einer Regel kann dieser Konfidenzwert verändert werden. Die Adaptionseinheit 9 unterscheidet dabei zwischen den unterschiedlichen Formen eines Nutzerfeedbacks. Bei einer Adaption, die auf implizitem Wissen basiert, wird der Konfidenzwert nur leicht erhöht oder verkleinert. Bei explizitem Feedback hingegen, bei welchem eine Hypothese ausgegeben und eine Nutzereingabe hierzu erfasst worden ist, kommt es zu einer sehr viel stärkeren Veränderung des Konfidenzwerts, da eine explizite Bewertung des Nutzers 17 zu der Hypothese erfasst worden ist. Außerdem kann der Status einer Regel verändert werden. Die Regel kann aktiviert werden, deaktiviert werden oder der Status kann so gesetzt werden, dass die Anwendung der Regel in Abhängigkeit von dem Konfidenzwert erfolgt.

Eine Regel kann mittels der Adaptionseinheit 9 beispielsweise so adaptiert werden, dass bei einem wiederholten Zurücksetzen oder Rückgängigmachen einer Automatisierung einer Regel diese deaktiviert wird und der Konfidenzwert auf Null gesetzt wird.

Wenn in der Hypothese dem Nutzer 17 eine Regelausführung angeboten wurde und er diese akzeptiert hat, kann der Regel zusätzlich ein hoher Konfidenzwert zugeordnet werden. In diesem Fall kann beispielsweise die Hypothesen-Verarbeitungseinheit 12 entscheiden, dass der Nutzer im Anschluss an die Ausführung einer zugeordneten Regel, dem Nutzer direkt die Automatisierung dieser Regel angeboten wird bzw. der Status der Regel auf "aktiviert" gesetzt werden soll. Beispielsweise kann die Sprachausgabe erfolgen: "Möchten Sie, dass ich für Sie immer die Sitzheizung aktiviere, wenn es morgens kälter als 12 °C ist?"

Des Weiteren ist es möglich, dass der Nutzer 17 durch die Nutzereingabe eine Regel, die zu der ausgegebenen Hypothese gehört, deaktiviert. Von der Bewertungseinheit 7 wird in diesem Fall mittels der der Adaptionseinheit 9 der Status der Regel auf "deaktiviert" gesetzt. Wenn nun im Zeitverlauf eine deaktivierte Regel einen zunehmend ansteigenden Konfidenzwert aufweist, kann die Hypothesen-Verarbeitungseinheit 12, trotz des Regelstatus "deaktiviert", mittels der Hypothesen-Erzeugungseinheit 6 erneut eine Hypothese erzeugen und eine Ausgabe generieren, welche dem Nutzer 17 anbietet, die Deaktivierung dieser Regel aufzuheben. Die Ausgabe über die Sprachschnittstelle 21 kann in diesem Fall beispielsweise die folgende sein: "Ich weiß, dass die Sitzheizung für Sie nicht automatisiert werden soll. Da Sie jedoch mehrfach die Sitzheizung in dieser Situation genutzt haben, könnte ich die Deaktivierung der Regel für Sie auflösen und die Regel aktivieren."

Wenn über eine der Schnittstellen 2 der Nutzer identifiziert worden ist, kann das regelbasierte Datensystem 8 auch nutzerspezifisch adaptiert werden. Dabei wird durch das explizite Nutzerfeedback erfasst, ob bestimmte Regeln, zu denen Hypothesen ausgegeben wurden, zu den individuellen Präferenzen des identifizierten Nutzers 17 passen. Die Regeln können dann nutzerspezifisch adaptiert werden. Wenn beispielsweise eine Nutzereingabe erfasst worden ist, dass eine bestimmte Regel der Präferenz eines bestimmten Musters entspricht, kann aus der zuvor über den Kontext erfassten Situation abgeleitet werden, welche Sitzheizungsstufe ein bestimmter Nutzer meistens eingestellt hat. Für das Ableiten des passenden Aktorwertes können dabei verschiedene Heuristiken und Verfahren eingesetzt werden. Dieser Lernprozess für die Parametrisierung einer Regel kann analog für die Sensorwerte des Bedingungsteils angewendet werden. Wenn kein eindeutiges Muster für eine Parametrisierung abgeleitet werden kann, kann eine Hypothese erzeugt werden und dem Nutzer über eine der Nutzerschnittstellen 18 ausgegeben werden. Durch eine Nutzereingabe kann der Nutzer 17 dann ein explizites Feedback geben, welches bewertet wird, woraufhin die entsprechende Regel nutzerspezifisch adaptiert werden kann. Die Ausgabe der Hypothese kann beispielsweise wie folgt lauten: "Ich habe festgestellt, dass Sie in Situation s üblicherweise die Sitzheizung aktivieren. Möchten Sie, dass ich diese Regel für Sie automatisiere? Und wenn ja, auf welcher Stufe soll ich die Sitzheizung dann für Sie aktivieren?"

Des Weiteren kann die Adaptionseinheit 9 das regelbasierte Datensystem 8 auf weitere Weise verändern. Beispielsweise kann die Adaptionseinheit 9 sicherstellen, dass das regelbasierte Datensystem 8 keine widersprüchlichen Regeln oder Logiken enthält. Es kann beispielsweise eine Konsistenzprüfung durchführen. Weiterhin kann die Adaptionseinheit 9 genutzt werden, um Domänen-spezifische Anforderungen sicherzustellen, indem es Regeln identifiziert und anschließend deaktiviert, die diesen Anforderungen widersprechen. Beispielsweise könnte eine Klima-Domäne fordern, dass keine Regel die Sitzheizung aktiviert, wenn auf dem Sitz ein Kindersitz montiert ist. Eine derartige Adaption des regelbasierten Datensystems 8 mittels der Adaptionseinheit 9 führt somit auch dazu, dass das an sich lernende System zertifizierbar bleibt.

Neben dem adaptiven System 20 für das eigene Fahrzeug können eine Vielzahl weiterer adaptiver Systeme 30 anderer Fahrzeuge vorgesehen sein. Das weitere adaptive System 30 steht stellvertretend für eine Vielzahl adaptiver Systeme einer Flotte, die durch verschiedene Nutzer genutzt wird. Diese weiteren adaptiven Systeme 30 können auch Kontextdaten an das Musterlernmodul 16 übertragen.

Das Musterlernmodul 16 wird beispielsweise auf dem Server des Fahrzeugherstellers oder in einer Cloud ausgeführt. Es werden dabei sämtliche Kontextdaten aller adaptiven Systeme 20, 30 gesammelt. Da das Musterlernmodul extern, d. h. unabhängig vom Fahrzeug ausgeführt wird, kann es auf sehr viel größere Speicher- und Rechenressourcen zurückgreifen. Auf diese Weise können in dem Musterlernmodul 16 weitere Analysen der erfassten Daten durchgeführt werden. Mittels des Musterlernmoduls 16 werden die erfassten Daten, insbesondere die Kontextdaten, weitergehend analysiert, um neue Regeln zu erlernen. Hierfür können Methoden der künstlichen Intelligenz und des Maschinenlernens verwendet werden. Beispielsweise Deep Learning ist eine Technologie, die hohe Anforderungen an die Rechenleistung eines Systems stellt und für die Analyse der Daten geeignet ist. Hierbei kann das Musterlernmodul 16 sowohl basierend auf den Daten eines einzelnen individuellen Nutzers neue Regeln erlernen oder basierend auf Flottendaten. Im Fall der Flottendaten können zum Beispiel alle Situationen bzw. Kontexte untersucht werden, in denen Nutzer auf einer bestimmten Straße gefahren sind, um Regeln für einen Kontext zu dieser bestimmten Straße zu erlernen. Neu erlernte Regeln werden entweder in ein spezifisches regelbasiertes Datensystem 8 eines Nutzers aufgespielt oder an alle regelbasierte Datensysteme 8 der Flotte übertragen. Zwecks Qualitätssicherung können durch das Musterlernmodul 16 neu erlernte Regeln vor der Übertragung auf ein regelbasiertes Datensystem 8 eines adaptiven Systems 20, 30 durch Experten geprüft, zertifiziert und gegebenenfalls freigegeben oder gelöscht werden.

Bei einem solchen aktiven Lernprozess können bestimmte Situationen gezielt gelernt werden, um auf diese Weise im externen Musterlernmodul 16 hypothetisches Wissen zu verifizieren. Hierfür können in dem Musterlernmodul 16 Regeln mit einem geringen Konfidenzwert erzeugt werden, an adaptive Systeme 20, 30 eines Fahrzeugs übertragen werden und die Entwicklung des Konfidenzwertes dieser Regel in den einzelnen adaptiven Systemen 20, 30 beobachtet werden.

Nachdem das regelbasierte Datensystem 8 durch die Hypothesenausgabe und die anschließende Hypothesenbewertung mittels der Adaptionseinheit 9 adaptiert wurde, kann eine Ergebniseinheit 13 eine Regel ausführen, wenn die Nutzerschnittstellensteuerung 10 ermittelt hat, dass keine Hypothese ausgegeben werden soll. Die Ergebniseinheit 13 erzeugt in Abhängigkeit von dem ermittelten Kontext und von dem gegebenenfalls adaptierten regelbasierten Datensystem 8 ein Regelergebnis einer Regel dieses Datensystems 8. Dieses Regelergebnis wird an eine Ausgabeeinheit 14 übertragen, welche ein Steuersignal in Abhängigkeit von dem erzeugten Regelergebnis erzeugt und ausgibt. Dieses Steuersignal kann an die Nutzerschnittstellen 18 übertragen werden, um bestimmte Informationen auszugeben. Ferner kann das Steuersignal an einen Datenbus 15 übertragen werden, welcher die Steuerung der verschiedenen Einrichtungen des Fahrzeugs ermöglicht. Beispielsweise können die verschiedenen Assistenzsysteme des Fahrzeugs angesteuert werden, es kann der Medienplayer angesteuert werden, es können verschiedene Klimafunktionen ausgeführt werden, es kann eine Lichtansteuerung erfolgen oder es können Steuersignale an externe Geräte wie ein in dem Fahrzeug befindliches Smartphone übertragen werden.

Gemäß einem weiteren Ausführungsbeispiel kann die Ergebniseinheit 13, unabhängig davon, ob das regelbasierte Datensystem 8 adaptiert wurde oder nicht, in Abhängigkeit von dem ermittelten Kontext eine Regel des regelbasierten Datensystems 8 auswählen. Zu dieser ausgewählten Regel erzeugt die Ergebniseinheit 13 ein Regelergebnis. Wie vorstehend beschrieben, wird das Regelergebnis an die Ausgabeeinheit 14 übertragen, welche ein Steuersignal erzeugt und ausgibt. Des Weiteren ist in die Ausgabeeinheit 19 eine Plausibilisierungseinheit 23 integriert. Mittels dieser Plausibilisierungseinheit 23 kann auf Basis des Bedingungsteils der ausgewählten Regel und des ermittelten Kontextes eine Nutzerausgabe erzeugt werden, welche die automatische Ausführung einer Regel für den Nutzer plausibilisiert. Dieser Nutzerausgabe kann dann sprachlich über die Sprachschnittstelle 21 oder textlich über ein Display ausgegeben werden. Diese Nutzerausgabe enthält eine sprachliche und/oder textliche Ausgabe des Bedingungsteils und/oder Ergebnisteils der ausgewählten Regel. Des Weiteren wird der Konfidenzwert, der der ausgewählten Regel zugeordnet ist, ausgegeben. Alternativ kann die Nutzerausgabe auch in Abhängigkeit von dem Konfidenzwert erzeugt werden. Bei einem niedrigen Konfidenzwert ist die Nutzerausgabe zur Plausibilisierung der Anwendung der ausgewählten Regel ausführlicher als bei einem höheren Konfidenzwert. Außerdem kann der vorstehend beschriebene Statuswert der ausgewählten Regel in der Nutzerausgabe enthalten sein.

Bei einem Ausführungsbeispiel automatisiert das Steuersignal eine Fahrzeugfunktion. Beispielsweise können Funktionen eines Assistenzsystems aktiviert werden, die dem Fahrer Teilbereiche der Fahraufgabe abnehmen. Des Weiteren kann über den Datenbus 15 eine Steuereinheit angesprochen werden, welche eine teilautomatisierte oder vollautomatisierte Fahrt des Fahrzeugs initiiert. Das Steuersignal automatisiert somit eine Fahrzeugfunktion mit einem bestimmten Automatisierungsgrad. Bei einem Ausführungsbeispiel hängt der Automatisierungsgrad von dem Konfidenzwert der ausgewählten Regel ab. Beispielsweise kann ein hoher Automatisierungsgrad, wie beispielsweise ein vollautomatisches Fahren des Fahrzeugs, nur von einer Regel aktiviert werden, die einen äußerst hohen Konfidenzwert hat. Andererseits kann eine Fahrfunktion mit einem niedrigen Automatisierungsgrad, wie beispielsweise das automatische Ansteuern von Lichtfunktionen des Fahrzeugs, auch von einer Regel aktiviert werden, welche einen niedrigen Konfidenzwert besitzt. Außerdem hängt der von dem Steuersignal angesteuerte Automatisierungsgrad der Fahrzeugfunktion von dem ermittelten Kontext des Fahrzeugs ab. Bei einer hochkomplexen Fahraufgabe wird bei einem bestimmten Konfidenzwert von dem Steuersignal ein niedrigerer Automatisierungsgrad angesteuert als bei einer leichteren Fahraufgabe wie beispielsweise auf einer Autobahn.

Wurde z. B. über einen Sensor 1 außerdem der Fahrer als Nutzer identifiziert, wird beispielsweise mittels der Kontextdaten-Ermittlungseinheit 4 der Grad der Nutzererfahrung ermittelt. Der Automatisierungsgrad hängt dann ferner von dem Grad der Nutzererfahrung ab. Bei einem erfahrenen Nutzer kann ein höherer Automatisierungsgrad gewählt werden als bei einem weniger erfahrenen Nutzer. Für bestimmte Fahrfunktionen kann jedoch auch umgekehrt ein hoher Automatisierungsgrad bei einem weniger erfahrenen Nutzer aktiviert werden, um den weniger erfahrenen Nutzer zu unterstützen.

Wie vorstehend erläutert, wird einer Regel ein Statuswert für einen Status zugeordnet. Bei dem dritten Statuswert wird eine zugeordnete Regel in Abhängigkeit von dem Konfidenzwert angewendet. Dieser dritte Statuswert kann für den Automatisierungsgrad weiter in Abhängigkeit von dem Konfidenzwert in verschiedene Automatisierungsstufen unterteilt werden, bei welchen das Steuersignal verschiedene weitere Ausgaben an den Nutzer steuert:
Bei einem sehr geringen Konfidenzwert der Regel, d. h. wenn der Konfidenzwert beispielsweise in den niedrigsten Bereich fällt, wird aktiv ein Vorschlag zum Ausführen einer Bedienhandlung an den Nutzer zusammen mit einer Nutzerausgabe erzeugt, welche die angewendete Regel für den Nutzer plausibilisiert, wie es vorstehend erläutert wurde.

Wenn ein geringer Konfidenzwert vorliegt, d. h. wenn der Konfidenzwert beispielsweise in einen zweitniedrigsten Bereich fällt, wird aktiv ein Vorschlag zum Ausführen einer Bedienhandlung an den Nutzer ohne eine ergänzende Nutzerausgabe erzeugt, welche die angewendete Regel für den Nutzer plausibilisiert.

Wenn ein mittlerer Konfidenzwert vorliegt, d. h. wenn zum Beispiel der Konfidenzwert in einen drittniedrigsten Bereich fällt, wird aktiv das Steuersignal zum automatischen Ausführen einer Bedienhandlung zusammen mit einer Notifizierung und einer Nutzerausgabe, welche die angewendete Regel für den Nutzer plausibilisiert, erzeugt. Die Notifizierung informiert dabei den Nutzer über die Ausführung des Steuersignals, die Nutzerausgabe plausibilisiert die angewendete Regel.

Bei einem hohen Konfidenzwert, d. h. wenn zum Beispiel der Konfidenzwert in einen viertniedrigsten Bereich fällt, wird aktiv das Steuersignal zum automatischen Ausführen einer Bedienhandlung zusammen mit einer Notifizierung jedoch ohne eine Nutzerausgabe, welche die angewendete Regel für den Nutzer plausibilisiert, erzeugt.

Bei einem sehr hohen Konfidenzwert, d. h. wenn der Konfidenzwert zum Beispiel in einen fünftniedrigsten Bereich bzw. den höchsten Bereich für die Konfidenzwerte fällt, wird aktiv das Steuersignal zum automatischen Ausführen einer Bedienhandlung ohne eine Notifizierung und ohne eine Nutzerausgabe zur Plausibilisierung der angewendeten Regel erzeugt.

Gemäß einem weiteren Ausführungsbeispiel ist das regelbasierte Datensystem 8 nutzerspezifisch ausgestaltet. Dieses nutzerspezifische regelbasierte Datensystem 8 wird in einem fahrzeugexternen Speicher, beispielsweise in einer Cloud, gespeichert. Dies ist in Figur 1 durch die gestrichelte Linie des adaptiven Systems 20 dargestellt. Nachdem ein Nutzer beispielsweise über einen Sensor 1 identifiziert worden ist, wird das nutzerspezifische regelbasierte Datensystem 8 für den identifizierten Nutzer an das Fahrzeug übertragen. Es kann dann optional wie vorstehend erläutert von dem Adaptivmodul 5, von der Nutzerschnittstellensteuerung 10 und insbesondere von der Ergebniseinheit 13 genutzt werden. In diesem Fall wird das regelbasierte Datensystem 8 jedoch in Abhängigkeit von dem ermittelten aktuellen Kontext so transformiert, dass das transformierte regelbasierte Datensystem 8 in dem ermittelten aktuellen Kontext anwendbar ist. Das transformierte regelbasierte Datensystem 8 kann dabei fahrzeugextern, bevorzugt jedoch in einem fahrzeuginternen Speicher gespeichert werden. Nutzt ein Nutzer beispielsweise verschiedene Fahrzeuge, wird das nutzerspezifische regelbasierte Datensystem 8 in ein Fahrzeug geladen, sobald dieser Nutzer in dem Fahrzeug identifiziert worden ist. Das in einem Fahrzeug erlernte Verhalten wird somit für den Nutzer auch in einem anderen Fahrzeug verfügbar gemacht. Dabei erfolgt jedoch eine Transformation des regelbasierten Datensystems 8 zur Anpassung an den aktuellen Kontext.

Wurde das regelbasierte Datensystem 8 über einen Nutzer beispielsweise in Deutschland im Winter hinsichtlich der Klimapräferenzen des Nutzers trainiert und reist dieser Nutzer dann in ein warmes Urlaubsgebiet und mietet sich dort ein Fahrzeug, wird das regelbasierte Datensystem 8 in dieses gemietete Fahrzeug geladen. Da sich dieses gemietete Fahrzeug jedoch in einem anderen Kontext befindet, nämlich in einer wärmeren Umgebung, erfolgt erfindungsgemäß eine Transformation des regelbasierten Datensystems 8, wodurch eine Anpassung an den neuen Kontext vorgenommen wird. Beispielsweise kann das regelbasierte Datensystem 8 an ein anderes Temperaturempfinden bei einem anderen Luftfeuchtigkeitsniveau angepasst werden.

Beispielsweise kann bei der Transformation des regelbasierten Datensystems 8 der Automatisierungsgrad, wie er vorstehend erläutert wurde, angepasst werden. Ferner kann der Konfidenzwert einer Hypothese oder einer Regel bei der Transformation angepasst werden. Ferner kann bei der Transformation ein Bedingungsteil einer Regel angepasst und/oder erweitert werden. Die Anpassungen umfassen insbesondere eine Addition, eine Subtraktion, eine Streckung oder Stauchung eines bestimmten Wertes. Bei der Erweiterung des Bedingungsteils können insbesondere bestimmte Attribute hinzugefügt werden, beispielsweise luftfeuchtigkeitsspezifische Attribute.

Nachdem das transformierte regelbasierte Datensystem 8 erzeugt wurde, kann wie vorstehend erläutert eine Regel ausgewählt werden, ein Regelergebnis der ausgewählten Regel erzeugt werden und in Abhängigkeit von dem erzeugten Regelergebnis ein Steuersignal erzeugt und ausgegeben werden. Auch eine zusätzliche Nutzerausgabe zur Plausibilisierung der ausgewählten Regel kann durchgeführt werden.

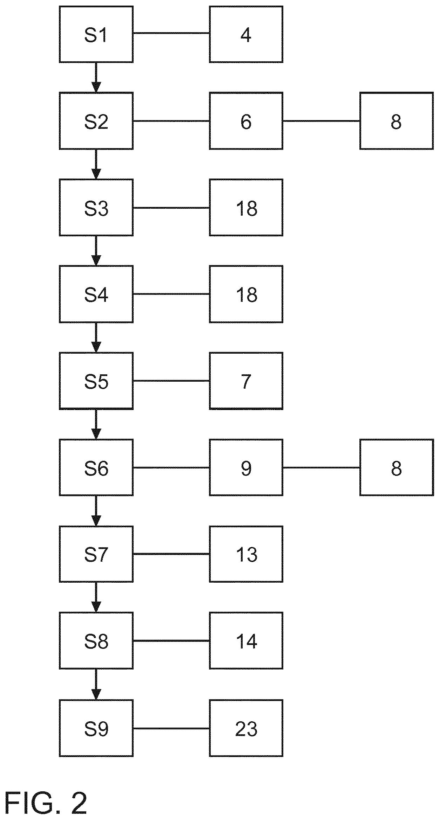

Mit Bezug zu Figur 2 wird ein Ausführungsbeispiel des erfindungsgemäßen Verfahrens erläutert, welches mit der vorstehend erläuterten Vorrichtung ausgeführt werden kann:
Im Schritt S1 wird der Kontext des Fahrzeugs ermittelt. Hierfür wird auf die Kontextdaten-Ermittlungseinheit 4 zurückgegriffen, welche wiederum auf die Extraktionseinheit 3, die Schnittstellen 2 und die Sensoren 1 zurückgreift. Im Schritt S1 kann auch der Nutzer identifiziert werden.

Im Schritt S2 wird in Abhängigkeit von dem ermittelten Kontext und von dem regelbasierten Datensystem 8 eine Hypothese für ein Regelergebnis einer Regel des regelbasierten Datensystems 8 erzeugt. Hierfür wird auf die Hypothesen-Erzeugungseinheit 6 zugegriffen, welche wiederum Regeln aus dem regelbasierten Datensystem 8 lädt.

Im Schritt S3 wird die Hypothese ausgegeben. Hierfür werden die Nutzerschnittstellen 18 verwendet.

Im Schritt S4 wird zu der Ausgabe der Hypothese eine Nutzereingabe erfasst. Diese Nutzereingabe erfolgt erneut über die Eingabeeinheit 22 der Nutzerschnittstellen 18.

Die Nutzereingabe wird an die Bewertungseinheit 7 übertragen, welche im Schritt S5 die Hypothese bewertet.

In Abhängigkeit von der Bewertung der Hypothese wird im Schritt S6 dann das regelbasierte Datensystem 8 mittels der Adaptionseinheit 9 adaptiert. Wenn die Nutzerschnittstellensteuerung 10 mittels der Hypothesen-Verarbeitungseinheit 12 ermittelt hat, dass eine Validierung einer Hypothese oder ein Nutzerfeedback nicht erforderlich ist, wird im Schritt S7 in Abhängigkeit von dem ermittelten Kontext und von dem adaptierten regelbasierten Datensystem 8 ein Regelergebnis einer Regel des Datensystems erzeugt. Die Nutzerschnittstellensteuerung 10 greift hierzu auf die Ergebniseinheit 13 zu.

Im Schritt S8 wird in Abhängigkeit von dem erzeugten Regelergebnis ein Steuersignal erzeugt, welches mittels der Ausgabeeinheit 14 auf geeignete Weise ausgegeben wird.

Gemäß einer Weiterbildung des Verfahrens kann im Schritt S6 bei der Adaption des regelbasierten Datensystems auch auf Flottenwissen zugegriffen werden, welches dem regelbasierten Datensystem von dem Musterlernmodul 16 übertragen wird. Auf diese Weise können neue Regeln in das regelbasierte Datensystem 8 eingespielt werden oder es können die Regeln des regelbasierten Datensystem 8 auf Basis von Daten adaptiert werden, welche über ein weiteres adaptives System 30 gewonnen wurden.

Gemäß einer Weiterbildung des Verfahrens wird auf Basis des Bedingungsteils der ausgewählten Regel und des ermittelten Kontextes eine Nutzerausgabe erzeugt, welche die Anwendung der ausgewählten Regel für den Nutzer plausibilisiert. Hierfür wird auf die Plausibilisierungseinheit 23 zugegriffen. Auch diese Nutzereingabe wird mittels der Ausgabeeinheit 14 auf geeignete Weise ausgegeben. Die Nutzerausgabe enthält eine sprachliche und/oder textliche Ausgabe des Bedingungsteils und/oder des Ergebnisteils der ausgewählten Regel sowie des Konfidenzwerts und des Statuswerts der ausgewählten Regel. Alle Ausgaben werden hierfür in eine natürlich sprachliche Mitteilung transformiert, um dem Nutzer die Anwendung der ausgewählten Regel verständlich zu machen. Hierfür kann auf das Nutzerschnittstellenmodell 11 zugegriffen werden.

Bei einem Ausführungsbeispiel wird im Schritt S8 ein Steuersignal erzeugt und ausgegeben, welches eine Fahrzeugfunktion mit einem Automatisierungsgrad automatisiert wie es vorstehend angegeben wurde. Der Automatisierungsgrad hängt dabei von dem Konfidenzwert der ausgewählten Regel ab. Ferner können in einem Schritt S9 Nutzerausgaben erzeugt und ausgegeben werden, welche eine angewendete Regel für den Nutzer plausibilisieren, wie es vorstehend erläutert wurde. Ob eine solche Nutzerausgabe erzeugt wird, hängt dabei von dem Konfidenzwert der ausgewählten Regel ab. Ferner kann gegebenenfalls in Abhängigkeit von dem Konfidenzwert eine Notifizierung wie vorstehend erläutert ausgegeben werden.

Gemäß einem weiteren Ausführungsbeispiel wird im Schritt S1 der Nutzer identifiziert. Danach wird vor dem Schritt S2 das fahrzeugextern gespeicherte nutzerspezifische regelbasierte Datensystem 8 für den identifizierten Nutzer an das Fahrzeug übertragen und in das transformierte regelbasierte Datensystem 8 überführt. Anschließend können optional die Schritte S2 bis S6 durchgeführt werden. Im Schritt S7 wird dann in Abhängigkeit von dem ermittelten Kontext und dem transformierten, gegebenenfalls adaptierten regelbasierten Datensystem 8 ein Regelergebnis erzeugt und anschließend im Schritt S8 das Steuersignal erzeugt und ausgegeben.

### Bezugszeichenliste

- 1: Sensoren; Nutzer-Identifikationseinheit
- 2: Schnittstellen
- 3: Extraktionseinheit
- 4: Kontextdaten-Ermittlungseinheit
- 5: Adaptivmodul
- 6: Hypothesen-Erzeugungseinheit
- 7: Bewertungseinheit
- 8: regelbasiertes Datensystem
- 9: Adaptionseinheit
- 10: Nutzerschnittstellensteuerung
- 11: Nutzerschnittstellenmodell
- 12: Hypothesen-Verarbeitungseinheit
- 13: Ergebniseinheit
- 14: Ausgabeeinheit
- 15: Datenbus
- 16: Musterlernmodul
- 17: Nutzer
- 18: Nutzerschnittstellen
- 19: graphische Nutzerschnittstelle
- 20: adaptives System
- 21: Sprachschnittstelle
- 22: Eingabeeinheit
- 23: Plausibilisierungseinheit
- 24: Konfidenzwert-Ermittlungseinheit
- 25: Transformationseinheit
- 30: weiteres adaptives System

## Patentansprüche

1. Verfahren zum Erzeugen von Steuersignalen zum Unterstützen von Insassen eines Fahrzeugs, bei dem
ein Kontext des Fahrzeugs ermittelt wird,
in Abhängigkeit von dem ermittelten Kontext eine Regel eines regelbasierten Datensystem (8) ausgewählt wird, wobei das regelbasierte Datensystem (8) eine Vielzahl von Regeln umfasst, wobei jede Regel einen Bedingungsteil und einen Ergebnisteil aufweist, wobei der Bedingungsteil Bedingungen für den Kontext des Fahrzeugs umfasst,
ein der ausgewählten Regel zugeordneter Konfidenzwert ermittelt wird, wobei der Konfidenzwert angibt, mit welcher Wahrscheinlichkeit das Regelergebnis der Regel der Präferenz des Nutzers (17) entspricht,
ein Regelergebnis der ausgewählten Regel erzeugt wird,
in Abhängigkeit von dem erzeugten Regelergebnis ein Steuersignal erzeugt und ausgegeben wird, wobei das Steuersignal eine Fahrzeugfunktion mit einem Automatisierungsgrad automatisiert, wobei der Automatisierungsgrad von dem Konfidenzwert der ausgewählten Regel abhängt,
**dadurch gekennzeichnet, dass**
einer Regel des regelbasierten Datensystems (8) ein Statuswert für einen Status zugeordnet wird, wobei der Statuswert angibt, wie der Konfidenzwert dieser Regel für diese Regel zu interpretieren ist,
wobei der Status zumindest einen ersten, einen zweiten und einen dritten Statuswert umfasst, wobei bei dem ersten Statuswert die zugeordnete Regel automatisiert angewendet wird, bei dem zweiten Statuswert die zugeordnete Regel nicht automatisiert angewendet wird und bei dem dritten Statuswert die zugeordnete Regel in Abhängigkeit von dem Konfidenzwert der zugeordneten Regel angewendet wird.

2. Verfahren nach Anspruch 1,
**dadurch gekennzeichnet, dass**
Schwellwerte definiert sind, welche angeben, bei welchem Konfidenzwert welcher Automatisierungsgrad durch das Steuersignal erzeugt wird.

3. Verfahren nach Anspruch 1 oder 2,
**dadurch gekennzeichnet, dass**
der Automatisierungsgrad ferner von dem ermittelten Kontext abhängt.

4. Verfahren nach einem der vorhergehenden Ansprüche,
**dadurch gekennzeichnet, dass**
auf Basis des Bedingungsteils der ausgewählten Regel und des ermittelten Kontextes eine Nutzerausgabe erzeugt wird, welche die Anwendung der ausgewählten Regel für den Nutzer (17) plausibilisiert, und
die erzeugte Nutzerausgabe dem Nutzer (17) ausgegeben wird.

5. Verfahren nach Anspruch 1,
**dadurch gekennzeichnet, dass**
bei dem dritten Statuswert aktiv ein Vorschlag zum Ausführen einer Bedienhandlung an den Nutzer (17) zusammen mit einer Nutzerausgabe erzeugt wird, welche die angewendete Regel für den Nutzer (17) plausibilisiert, wenn der Konfidenzwert in den niedrigsten Bereich fällt.

6. Verfahren nach einem der Ansprüche 1 oder 5,
**dadurch gekennzeichnet, dass**
bei dem dritten Statuswert aktiv ein Vorschlag zum Ausführen einer Bedienhandlung an den Nutzer (17) ohne eine Nutzerausgabe erzeugt wird, welche die angewendete Regel für den Nutzer (17) plausibilisiert, wenn der Konfidenzwert in einen zweitniedrigsten Bereich fällt.

7. Verfahren nach einem der Ansprüche 1, 5 oder 6,
**dadurch gekennzeichnet, dass**
bei dem dritten Statuswert aktiv das Steuersignal zum automatischen Ausführen einer Bedienhandlung zusammen mit einer Notifizierung und einer Nutzerausgabe, welche die angewendete Regel für den Nutzer (17) plausibilisiert, erzeugt wird, wenn der Konfidenzwert in einen drittniedrigsten Bereich fällt.

8. Verfahren nach einem der Ansprüche 1 oder 5 bis 7,
**dadurch gekennzeichnet, dass**
bei dem dritten Statuswert aktiv das Steuersignal zum automatischen Ausführen einer Bedienhandlung zusammen mit einer Notifizierung jedoch ohne eine Nutzerausgabe, welche die angewendete Regel für den Nutzer (17) plausibilisiert, erzeugt wird, wenn der Konfidenzwert in einen viertniedrigsten Bereich fällt.

9. Verfahren nach einem der Ansprüche 1 oder 5 bis 8,
**dadurch gekennzeichnet, dass**
bei dem dritten Statuswert aktiv das Steuersignal zum automatischen Ausführen einer Bedienhandlung ohne eine Notifizierung und ohne eine Nutzerausgabe, welche die angewendete Regel für den Nutzer (17) plausibilisiert, erzeugt wird, wenn der Konfidenzwert in einen fünftniedrigsten Bereich fällt.

10. Verfahren nach einem der vorhergehenden Ansprüche,
**dadurch gekennzeichnet, dass**
der Nutzer (17) identifiziert wird, ein Grad der Nutzererfahrung ermittelt wird und der Automatisierungsgrad ferner von dem ermittelten Grad der Nutzererfahrung abhängt.

11. Verfahren nach einem der vorhergehenden Ansprüche,
**dadurch gekennzeichnet, dass**
in Abhängigkeit von dem ermittelten Kontext und von dem regelbasierten Datensystem (8) zunächst eine Hypothese für ein Regelergebnis einer Regel des Datensystems (8) erzeugt wird,
mittels einer Nutzerschnittstelle (18) die erzeugte Hypothese ausgegeben wird,
eine Nutzereingabe zu der Ausgabe der Hypothese erfasst wird,
mittels der erfassten Nutzereingabe die ausgegebene Hypothese bewertet wird,
in Abhängigkeit von der Bewertung der Hypothese das regelbasierte Datensystem (8) automatisch adaptiert wird und
in Abhängigkeit von dem ermittelten Kontext und von dem adaptierten regelbasierten Datensystem (8) das Regelergebnis der Regel des Datensystems (8) automatisch erzeugt wird.

12. Vorrichtung zum Erzeugen von Steuersignalen zum Unterstützen von Insassen eines Fahrzeugs, mit
einer Kontext-Ermittlungseinheit (4) zum Ermitteln des Kontextes des Fahrzeugs,
einer Ergebniseinheit (13), die ausgebildet ist, in Abhängigkeit von dem ermittelten Kontext eine Regel eines regelbasierten Datensystems (8) auszuwählen, wobei das regelbasierte Datensystem (8) eine Vielzahl von Regeln umfasst, wobei jede Regel einen Bedingungsteil und einen Ergebnisteil aufweist, wobei der Bedingungsteil Bedingungen für den Kontext des Fahrzeugs umfasst, und ein Regelergebnis der ausgewählten Regel zu erzeugen,
einer Konfidenzwert-Ermittlungseinheit, die ausgebildet ist, einen der ausgewählten Regel zugeordneten Konfidenzwert zu ermitteln, wobei der Konfidenzwert angibt, mit welcher Wahrscheinlichkeit das Regelergebnis der Regel der Präferenz des Nutzers (17) entspricht, und
einer Ausgabeeinheit (14) zum Erzeugen und Ausgeben eines Steuersignals in Abhängigkeit von dem erzeugten Regelergebnis, wobei das Steuersignal eine Fahrzeugfunktion mit einem Automatisierungsgrad automatisiert, wobei der Automatisierungsgrad von dem Konfidenzwert der ausgewählten Regel abhängt, **dadurch gekennzeichnet, dass**
einer Regel des regelbasierten Datensystems (8) ein Statuswert für einen Status zugeordnet ist, wobei der Statuswert angibt, wie der Konfidenzwert dieser Regel für diese Regel zu interpretieren ist,
wobei der Status zumindest einen ersten, einen zweiten und einen dritten Statuswert umfasst, wobei bei dem ersten Statuswert die zugeordnete Regel automatisiert angewendet wird, bei dem zweiten Statuswert die zugeordnete Regel nicht automatisiert angewendet wird und bei dem dritten Statuswert die zugeordnete Regel in Abhängigkeit von dem Konfidenzwert der zugeordneten Regel angewendet wird.

13. Computerprogrammprodukt, umfassend Befehle, die bei der Ausführung durch zumindest einen Computer diesen veranlassen, das Verfahren nach einem der Ansprüche 1 bis 11 auszuführen.

## Claims

1. Method for generating control signals for assisting occupants of a vehicle, in which
a context of the vehicle is determined,
a rule of a rule-based data system (8) is selected on the basis of the determined context, wherein the rule-based data system (8) comprises a multiplicity of rules, wherein each rule has a condition part and a result part, wherein the condition part comprises conditions for the context of the vehicle,
a confidence value assigned to the selected rule is determined, wherein the confidence value indicates the probability with which the rule result of the rule corresponds to the preference of the user (17),
a rule result of the selected rule is generated,
a control signal is generated and output on the basis of the generated rule result, wherein the control signal automates a vehicle function with a degree of automation, wherein the degree of automation depends on the confidence value of the selected rule,
**characterized in that**
a status value for a status is assigned to a rule of the rule-based data system (8), wherein the status value indicates how the confidence value of this rule should be interpreted for this rule,
wherein the status comprises at least a first, a second and a third status value, wherein the assigned rule is automatically applied for the first status value, the assigned rule is not automatically applied for the second status value and the assigned rule is applied on the basis of the confidence value of the assigned rule for the third status value.

2. Method according to Claim 1,
**characterized in that**
threshold values are defined and indicate which degree of automation is generated by the control signal for which confidence value.

3. Method according to Claim 1 or 2,
**characterized in that**
the degree of automation also depends on the determined context.

4. Method according to one of the preceding claims,
**characterized in that**
a user output, which checks the plausibility of the application of the selected rule for the user (17), is generated on the basis of the condition part of the selected rule and the determined context, and
the generated user output is output to the user (17) .

5. Method according to Claim 1,
**characterized in that**
a recommendation to carry out an operational action is actively generated for the third status value together with a user output, which checks the plausibility of the applied rule for the user (17), if the confidence value falls in the lowest range.

6. Method according to either of Claims 1 and 5,
**characterized in that**
a recommendation to carry out an operational action is actively generated for the third status value for the user (17) without a user output, which checks the plausibility of the applied rule for the user (17), if the confidence value falls in a second lowest range.

7. Method according to one of Claims 1, 5 and 6,
**characterized in that**
the control signal for automatically carrying out an operational action is actively generated for the third status value together with a notification and a user output, which checks the plausibility of the applied rule for the user (17), if the confidence value falls in a third lowest range.

8. Method according to one of Claims 1 or 5 to 7,
**characterized in that**
the control signal for automatically carrying out an operational action is actively generated for the third status value together with a notification but without a user output, which checks the plausibility of the applied rule for the user (17), if the confidence value falls in a fourth lowest range.

9. Method according to one of Claims 1 or 5 to 8,
**characterized in that**
the control signal for automatically carrying out an operational action is actively generated for the third status value without a notification and without a user output, which checks the plausibility of the applied rule for the user (17), if the confidence value falls in a fifth lowest range.

10. Method according to one of the preceding claims,
**characterized in that**
the user (17) is identified, a degree of user experience is determined and the degree of automation also depends on the determined degree of user experience.

11. Method according to one of the preceding claims,
**characterized in that**
a hypothesis for a rule result of a rule of the data system (8) is first of all generated on the basis of the determined context and the rule-based data system (8),
the generated hypothesis is output by means of a user interface (18),
a user input in response to the output of the hypothesis is captured,
the output hypothesis is assessed by means of the captured user input,
the rule-based data system (8) is automatically adapted on the basis of the assessment of the hypothesis, and
the rule result of the rule of the data system (8) is automatically generated on the basis of the determined context and the adapted rule-based data system (8).

12. Apparatus for generating control systems for assisting occupants of a vehicle, having
a context determination unit (4) for determining the context of the vehicle,
a result unit (13) which is designed to select a rule of a rule-based data system (8) on the basis of the determined context, wherein the rule-based data system (8) comprises a multiplicity of rules, wherein each rule has a condition part and a result part, wherein the condition part comprises conditions for the context of the vehicle, and to generate a rule result of the selected rule,
a confidence value determination unit which is designed to determine a confidence value assigned to the selected rule, wherein the confidence value indicates the probability with which the rule result of the rule corresponds to the preference of the user (17), and
an output unit (14) for generating and outputting a control signal on the basis of the generated rule result, wherein the control signal automates a vehicle function with a degree of automation, wherein the degree of automation depends on the confidence value of the selected rule,
**characterized in that**
a status value for a status is assigned to a rule of the rule-based data system (8), wherein the status value indicates how the confidence value of this rule should be interpreted for this rule,
wherein the status comprises at least a first, a second and a third status value, wherein the assigned rule is automatically applied for the first status value, the assigned rule is not automatically applied for the second status value and the assigned rule is applied on the basis of the confidence value of the assigned rule for the third status value.

13. Computer program product comprising instructions which, when executed by at least one computer, cause the latter to carry out the method according to one of Claims 1 to 11.

## Revendications

1. Procédé permettant de générer des signaux de commande pour aider les occupants d'un véhicule, dans lequel
un contexte du véhicule est déterminé,
une règle d'un système de données (8) à base de règles est sélectionnée en fonction du contexte déterminé, le système de données (8) à base de règles comprenant une pluralité de règles, chaque règle comportant une partie conditionnelle et une partie résultat, la partie conditionnelle comprenant des conditions relatives au contexte du véhicule,
une valeur de confiance associée à la règle sélectionnée est déterminée, la valeur de confiance indiquant avec quelle probabilité le résultat de la règle correspond à la préférence de l'utilisateur (17),
un résultat de règle de la règle sélectionnée est généré, un signal de commande est généré et délivré en sortie en fonction du résultat de règle généré, le signal de commande automatisant une fonction du véhicule avec un certain degré d'automatisation, le degré d'automatisation dépendant de la valeur de confiance de la règle sélectionnée,
**caractérisé en ce qu'**une valeur d'état pour un état est associée à une règle du système de données (8) à base de règles, la valeur d'état indiquant comment la valeur de confiance de cette règle doit être interprétée pour cette règle,
dans lequel l'état comprend au moins une première, une deuxième et une troisième valeur d'état, dans lequel, pour la première valeur d'état, la règle associée est appliquée de manière automatisée, pour la deuxième valeur d'état, la règle associée n'est pas appliquée de manière automatisée et pour la troisième valeur d'état, la règle associée est appliquée en fonction de la valeur de confiance de la règle associée.

2. Procédé selon la revendication 1,
**caractérisé en ce que** des valeurs de seuil sont définies, lesquelles indiquent à quelle valeur de confiance quel degré d'automatisation est généré par le signal de commande.

3. Procédé selon la revendication 1 ou 2,
**caractérisé en ce que** le degré d'automatisation dépend en outre du contexte déterminé.

4. Procédé selon l'une quelconque des revendications précédentes,
**caractérisé en ce qu'**une sortie utilisateur, qui valide pour l'utilisateur (17) l'application de la règle sélectionnée, est générée sur la base de la partie conditionnelle de la règle sélectionnée et du contexte déterminé, et
la sortie utilisateur générée est délivrée en sortie à l'utilisateur (17).

5. Procédé selon la revendication 1,
**caractérisé en ce que**, pour la troisième valeur d'état, une proposition d'exécution d'une action de service, qui valide pour l'utilisateur (17) la règle appliquée, est générée activement à l'attention de l'utilisateur (17) en même temps qu'une sortie utilisateur, lorsque la valeur de confiance s'abaisse dans la plage la plus basse.

6. Procédé selon l'une quelconque des revendications 1 ou 5,
**caractérisé en ce que**, pour la troisième valeur d'état, une proposition d'exécution d'une action de commande, qui valide pour l'utilisateur (17) la règle appliquée, est générée activement à l'attention de l'utilisateur (17) sans sortie utilisateur, lorsque la valeur de confiance s'abaisse dans une deuxième plage la plus basse.

7. Procédé selon l'une quelconque des revendications 1, ou 6,
**caractérisé en ce que**, pour la troisième valeur d'état, le signal de commande permettant d'exécuter automatiquement une action de service, qui valide pour l'utilisateur (17) la règle appliquée, est généré activement en même temps qu'une notification et qu'une sortie utilisateur, lorsque la valeur de confiance s'abaisse dans une troisième plage la plus basse.

8. Procédé selon l'une quelconque des revendications 1 à 7,
**caractérisé en ce que**, pour la troisième valeur d'état, le signal de commande permettant d'exécuter automatiquement une action de service, qui valide pour l'utilisateur (17) la règle appliquée, est généré activement en même temps qu'une notification, mais sans sortie utilisateur, lorsque la valeur de confiance s'abaisse dans une quatrième plage la plus basse.

9. Procédé selon l'une quelconque des revendications 1 ou à 8,
**caractérisé en ce que**, pour la troisième valeur d'état, le signal de commande permettant d'exécuter automatiquement une action de service, qui valide pour l'utilisateur (17) la règle appliquée, est généré activement sans notification et sans sortie utilisateur, lorsque la valeur de confiance s'abaisse dans une cinquième plage la plus basse.

10. Procédé selon l'une quelconque des revendications précédentes,
**caractérisé en ce que** l'utilisateur (17) est identifié, un degré d'expérience de l'utilisateur est déterminé et le degré d'automatisation dépend en outre du degré déterminé d'expérience de l'utilisateur.

11. Procédé selon l'une quelconque des revendications précédentes,
**caractérisé en ce que**,
en fonction du contexte déterminé et du système de données (8) à base de règles, une hypothèse est d'abord générée en ce qui concerne un résultat de règle d'une règle du système de données (8),
l'hypothèse générée est délivrée en sortie au moyen d'une interface utilisateur (18),
une entrée utilisateur est acquise pour délivrer en sortie l'hypothèse,
l'hypothèse délivrée en sortie est évaluée au moyen de l'entrée utilisateur acquise,
en fonction de l'évaluation de l'hypothèse, le système de données (8) à base de règles est automatiquement adapté, et
en fonction du contexte déterminé et du système de données (8) à base de règles adapté, le résultat de règle de la règle du système de données (8) est généré automatiquement.

12. Dispositif permettant de générer des signaux de commande pour aider les occupants d'un véhicule, comprenant
une unité de détermination de contexte (4) permettant de déterminer le contexte du véhicule,
une unité de résultat (13), qui est conçue pour sélectionner, en fonction du contexte déterminé, une règle d'un système de données (8) à base de règles, le système de données (8) à base de règles comprenant une pluralité de règles, chaque règle comportant une partie conditionnelle et une partie résultat, la partie conditionnelle comprenant des conditions relatives au contexte du véhicule, et pour générer un résultat de règle de la règle sélectionnée,
une unité de détermination de valeur de confiance, qui est conçue pour déterminer une valeur de confiance associée à la règle sélectionnée, la valeur de confiance indiquant avec quelle probabilité le résultat de règle de la règle correspond à la préférence de l'utilisateur (17), et
une unité de sortie (14) permettant de générer et de délivrer en sortie un signal de commande en fonction du résultat de règle généré, le signal de commande automatisant une fonction du véhicule avec un certain degré d'automatisation, le degré d'automatisation dépendant de la valeur de confiance de la règle sélectionnée,
**caractérisé en ce qu'**une valeur d'état pour un état est associée à une règle du système de données (8) à base de règles, la valeur d'état indiquant comment la valeur de confiance de cette règle doit être interprétée pour cette règle,
dans lequel l'état comprend au moins une première, une deuxième et une troisième valeur d'état, dans lequel, pour la première valeur d'état, la règle associée est appliquée de manière automatisée, pour la deuxième valeur d'état, la règle associée n'est pas appliquée de manière automatisée et pour la troisième valeur d'état, la règle associée est appliquée en fonction de la valeur de confiance de la règle associée.

13. Produit de programme d'ordinateur comprenant des instructions qui, lorsqu'elles sont exécutées par au moins un ordinateur, amènent ce dernier à mettre en œuvre le procédé selon l'une quelconque des revendications 1 à 11.
